(19)

Europäisches
Patentamt
European
Patent Office
Office européen
des brevets

(11) **EP 2 546 821 A1**

(12) **EUROPEAN PATENT APPLICATION**
published in accordance with Art. 153(4) EPC

(43) Date of publication:
**16.01.2013 Bulletin 2013/03**

(21) Application number: **10847469.3**

(22) Date of filing: **14.05.2010**

(51) Int Cl.:
**G09B 29/00** *(2006.01)*   **G01C 21/00** *(2006.01)*

(86) International application number:
**PCT/JP2010/058151**

(87) International publication number:
**WO 2011/111239 (15.09.2011 Gazette 2011/37)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **11.03.2010 JP 2010053885**

(71) Applicant: **Geo Technical Laboratory Co., Ltd.**
**Fukuoka-shi, Fukuoka 812-0013 (JP)**

(72) Inventors:
• **KISHIKAWA, Kiyonari**
  **Fukuoka-shi**
  **Fukuoka 812-0013 (JP)**
• **ADA, Masaya**
  **Fukuoka-shi**
  **Fukuoka 812-0013 (JP)**

• **TESHIMA, Eiji**
  **Fukuoka-shi**
  **Fukuoka 812-0013 (JP)**
• **IRIE, Toru**
  **Fukuoka-shi**
  **Fukuoka 812-0013 (JP)**
• **TOMITAKA, Tsubasa**
  **Fukuoka-shi**
  **Fukuoka 812-0013 (JP)**

(74) Representative: **Tomlinson, Kerry John**
  **Dehns**
  **St Bride's House**
  **10 Salisbury Square**
  **London**
  **EC4Y 8JD (GB)**

(54) **THREE-DIMENSIONAL MAP DRAWING SYSTEM**

(57)    Disclosed is a three-dimensional map wherein scale is preserved. Landscape feature data, wherein roads, buildings, and other landscape features are drawn three-dimensionally, is prepared, and a three-dimensional map is drawn on the basis of the data. The landscape feature data is generated by a method that projects an actual landscape feature (CST2) upon a projection plane (PL2) with parallel lines along the projection direction (PRJ), or in other words, a parallel projection, rather than a perspective projection. The landscape feature data is comprised of either two-dimensional raster data or polygonal data that draws a parallel projected projection map. It is possible to draw the three-dimensional map by only drawing the prepared landscape feature data, without rendering or other load-intensive processing. Unlike the perspective projection, with the parallel projection, the positional relations and scale of shapes between buildings is preserved, thereby facilitating a three-dimensional map wherein scale is preserved.

Fig.2a

EP 2 546 821 A1

# Fig.2b

BLD1   BLD2      BLD3

# Description

## Technical Field

The present invention relates to a three-dimensional map drawing system of drawing a three-dimensional map that expresses features three-dimensionally.

## Background Art

There is known technology of displaying features, such as buildings and roads, three-dimensionally in display of an electronic map, for example, on the screen of a navigation device or a computer. In the three-dimensional map, the features are generally drawn by the projection method called perspective projection.

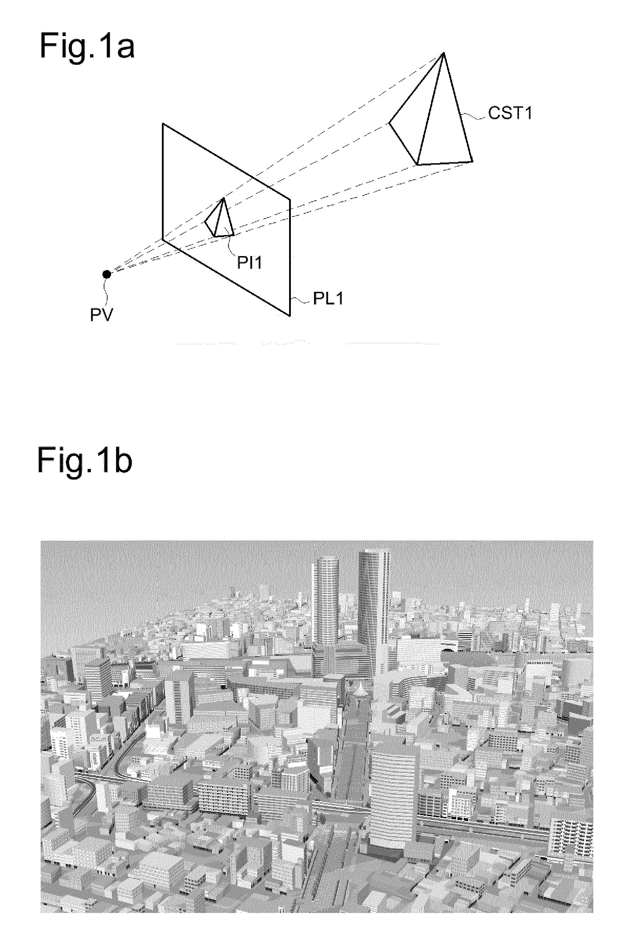

Fig. 1 illustrates an example of drawing a three-dimensional map by perspective projection. As shown in Fig. 1a, perspective projection gives a projection result PI1 as the set of intersections of straight lines connecting the user's point of view PV with respective apexes of an actual feature CST1 and a projection plane PL1. This projection method enables the features to be drawn three-dimensionally in the state close to the actual view as shown in Fig. 1b. In the illustrated example, the user's point of view PV is set above the features. Compared with the two-dimensional map, the three-dimensional map advantageously enables the geography in the range drawn on the map to be understood visually and intuitively.

PTL1 and PTL2 describe the conventional technologies on display in the three-dimensional map. The technology disclosed in PTL1 determines whether a traffic sign is hidden behind a building in perspective projection of three-dimensional map information and gives an advanced notice of the traffic sign hidden behind the building. The technology disclosed in PTL2 displays a character representing the name with respect to only a polygon having the area of or over a predetermined level in perspective projection from the midair point of view.

## Citation List

## Patent Literatures

PTL1: JP 4070507B
PTL1: JP 3428294B

## SUMMARY

## Technical Problem

As illustrated in Fig. 1b, perspective projection can provide an image close to the landscape in the actual user's view.
This method, however, has the problem of changing the scale of the drawn map. As shown in Fig. 1b, the relative distance in the depth direction (top-bottom direction of the drawing) is made shorter than the actual relative distance with a change in view from the near view (near the bottom of the drawing) to the distant view (near the top of the drawing). The relative interval in the left-right direction is also made shorter than the actual relative interval with a change in view from the near view to the distant view. The distance represented by a unit length on the map accordingly differs between the near view and the distant view with respect to both the left-right direction and the depth direction.

The technology of drawing a three-dimensional map generally aims to reproduce the real world in the user's view and does not consider the problem of changing the scale by perspective projection. Changing the scale on the map is a significant problem that may greatly damage the meaning of the map. Changing the scale means that the three-dimensional image drawn by perspective projection is useless as the map. In order to understand the accurate positional relationship between features, the user should refer to a planar map.
In order to solve the foregoing, the object of the invention is to provide a three-dimensional map with keeping the scale.

## Solution to Problem

The following describes the configuration of a three-dimensional map drawing system of drawing a three-dimensional map that expresses a feature three-dimensionally according to the invention.
The three-dimensional map drawing system of the invention includes a feature database, a drawing range input and a drawer. The feature database stores feature data as two-dimensional drawing data of a feature projected on a plane by parallel projection from an oblique direction inclined by a predetermined projection direction to a vertical direction. The system of the invention draws the feature not by perspective projection but by parallel projection. The feature data may be provided in the form of raster data or in the form of polygonal data. The polygonal data has the advantage that reduces the total data volume and provides a high-quality map since the polygonal data does not give a grainy image even in enlargement.

The drawing range input inputs specification of a drawing range in which the three-dimensional map is to be drawn, and the drawer reads feature data corresponding to the input specification from the feature database and makes a drawing. The drawing includes both displaying a map on a display of, for example, a computer or a navigation device and printing a map with, for example a printer. The range to be drawn (hereinafter referred to as drawing range) may be specified by any of various methods, for example, a method of directly specifying the drawing range with the coordinates of latitude and longitude or a method of specifying the drawing range by setting a representative point of the drawing range and the scaling factor. The drawing range may be manually set by the user's input or may be automatically set by the drawing range input with the user's entry of the current position during route guidance.

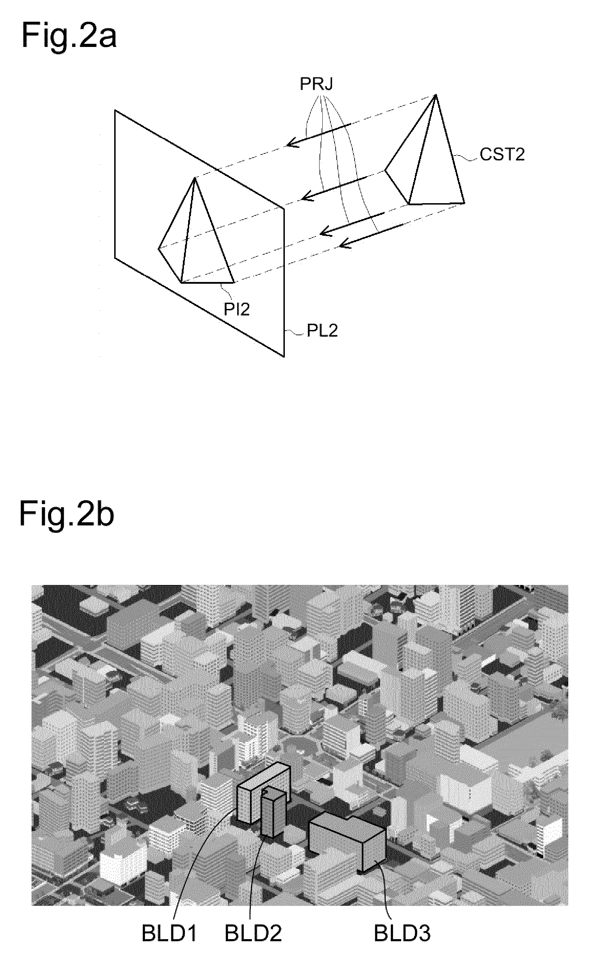

In the map drawn by the three-dimensional map drawing system of the invention, each feature is expressed three-dimensionally by parallel projection. Fig. 2 illustrates an example of drawing a three-dimensional map by parallel projection. As shown in Fig. 2a, parallel projection gives a projection result PI2 at the intersections of specified parallel lines PRJ going through the respective apexes of an actual feature CST2 and a projection plane PL2. When the direction of the parallel lines PRJ is the vertical direction and the projection plane PL2 is parallel to the ground level, the projection result is a two-dimensional planar map. The parallel projection of the invention is, however, from an oblique direction different from the vertical direction and thereby gives a three-dimensionally drawn projection result.

Fig. 2b shows an example of a map drawn by parallel projection. For example, the edges of buildings BLD1, BLD2 and BLD3 are formed by parallel lines. In parallel projection, the parallel edges in the actual features are also shown in parallel on the map. This means that a building actually having a fixed width is shown in fixed width on the map. The same applies to the width of the road and the interval between buildings, as well as the width of the building. Parallel projection keeps the scale in the left-right direction and in the depth direction unchanged, irrespective of the three-dimensional expression of features.

The present invention employs parallel projection to provide a three-dimensional map with keeping the scale unchanged. The parallel projection may make a drawing with multiplication in the depth direction by a fixed scale factor, in order to match the sense of depth in the projection drawing with the actual depth. The parallel projection relatively keeps the scale unchanged in the left-right direction and in the depth direction even in the case of multiplication by the fixed scale factor.

The technology of parallel projection is widely used in the field of drawing but has not been applied to three-dimensional maps. As described previously, three-dimensional maps have aimed to faithfully draw the landscape as the user's view, so that introduction of parallel projection has not been considered at all. The inventors of the invention have introduced parallel projection by changing the point of view from faithfully drawing the landscape to placing importance on keeping the scale of the map unchanged.

The system of the invention employs parallel projection and has the following advantageous effects on the processing load of drawing a map.

While perspective projection (Fig. 1a) requires specification of a point of view PV as the reference point of projection, parallel projection (Fig. 2a) does not require specification of such a point of view. In perspective projection, projection processing called rendering is required to obtain a projection drawing based on a three-dimensional model representing the three-dimensional shape of a feature, every time the point of view is specified.

Parallel projection, on the other hand, can provide in advance the drawing result with respect to a predetermined projection direction, due to non-requirement for specification of the point of view. The drawing result generated independently of the point of view can be used commonly, irrespective of the specified drawing range of the map. The system of the invention accordingly does not require the rendering process in the course of drawing a three-dimensional map, thus significantly reducing the processing load during map drawing.

According to one embodiment of the invention, the feature data may be obtained by parallel projection of a virtual feature that is given by expansion of the feature in a height direction by a factor that is greater than 1.

The user generally looks up a feature from the ground level. Obliquely downward parallel direction of the feature may cause the user to feel the sense of height of the feature in the projection drawing lower than the sense of height in the look-up view of the actual feature. Projection of the higher virtual feature than the actual height by multiplication by the factor effectively relieves the feeling of strangeness in sense of height. Expansion of the feature in the height direction by the factor keeps the scale in the left-right direction and in the depth direction unchanged, thus ensuring the advantageous effects of the invention.

According to another embodiment of the invention, the feature database may store feature data in a plurality of levels having different scales. Dividing the feature data in the plurality of levels provides detailed data of the narrower area in the lower level, while providing data of the wider area in the higher level with omitting details of features to reduce the data volume. The plurality of levels may be three or more levels. The drawer may draw the map by using feature data in the level corresponding to the drawing range.

In the application of multiple layers, it is preferable to generate feature data in each level by parallel projection of the same projection direction and the same projection angle (hereinafter the projection direction and the projection angle are collectively referred to as "parallel projection parameters"). The projected position of a certain coordinate point is determined by the parallel projection parameters. Employing the same parallel projection parameters in the respective levels enables the projected positions of one identical coordinate point in the respective levels to be readily correlated. This allows relatively easy scaling of the map, while fixing a specific point, such as the center position in the drawing range.

According to another embodiment, the parallel projection parameters may be changed for each level. In the case of changing the level used for drawing, it is preferable to make a drawing in the next level after analysis of the position to which the specific point, such as the center position in the drawing range, is projected in the next level.

According to another embodiment of the invention, the feature database may store different types of feature data for one identical area with respect to different projection directions. The drawing range input may further input specification of a drawing direction of the three-dimensional map, and the drawer may make the drawing by using feature data with respect to a projection direction corresponding to the specified drawing direction.

This configuration enables three-dimensional maps to be drawn in the views from various directions, thereby improving the convenience. The three-dimensional map of a feature projected from only one direction has the blind spot where the feature is hidden behind a building drawn three-dimensionally. Providing the three-dimensional maps in different projection directions eliminates the blind spot. In application of the three-dimensional maps to route guidance, the three-dimensional maps in different projection directions are selectively used along the route to be guided. This enables smooth head up display where the moving direction is upward in the display.

In this embodiment, the drawing direction may be specified by the user or may be set to the user's moving direction in head up display.

According to another embodiment, the system may further include a character database that stores character data used to specify a character representing name of the feature. When there are feature data from a plurality of projection directions, the character database may be provided individually for each projection direction, or one character database may be correlated to different types of feature data with respect to different projection directions. In correlation to the different types of feature data, the character data may have a flag that specifies output or non-output of the character on the three-dimensional map according to the projection direction (hereinafter referred to as behind flag). The drawer may output the character specified to be output by the flag on the three-dimensional map. The output herein includes, for example, displaying on a display and printing with a printer.

In the three-dimensional map, a feature is visually recognized or is hidden in the blind spot according to the projection direction. It is thus preferable to control output or non-output of the character representing the feature, based on the visibility. In this embodiment, display or non-display of the character is stored in advance as the setting of the behind flag. This enables the output of the character to be adequately controlled without any complicated arithmetic operation or analysis.

The character data may include three-dimensional specification of an output position of the character including height information. The drawer may output the character at a position determined by similar parallel projection of the specified output position to parallel projection in generation of the feature data. This ensures the display reflecting the height information.

This configuration enables the character to be displayed not only on the ground level of the feature expressed three-dimensionally but in the vicinity of the wall surface of the upper stories or above the feature, thus outputting the easy-to-read three-dimensional map. The height information may be specified in any of various forms, for example, the observed value like meters or the number of stories of the feature. The specification form of the height information may be set for each feature type. The different height may be specified according to the drawing direction.

According to another embodiment of the invention, the feature database may store the feature data in meshes that are predetermined two-dimensional areas. Each mesh may preferably be allowed to store feature data of a feature that is not located in the mesh.

In the general planar electronic map, data of a feature that is located across a plurality of meshes is stored as polygons divided into the meshes. In the three-dimensional electronic map, data of a feature that is located across a plurality of meshes is stored dividedly into the meshes when the feature is dividable, while being stored collectively in one mesh when the feature is undividable. In the general electronic map data, feature data stored in each mesh is generally data of a feature that is located partly or wholly in the mesh.

In parallel projection, however, as the new problem, there is a possibility that an upper part of a feature that is located in a certain mesh is drawn in another mesh. As the measure to solve the problem, the system of the invention allows each mesh to store data of even a mesh that is not located in the mesh. This configuration draws a three-dimensional map of even a feature that is to be drawn across a plurality of meshes, by parallel projection without any complicated processing.

According to another embodiment of the invention, data of a road included in the feature data may be obtained by parallel projection by taking into account height of each point on the road, i.e., undulation. The following configuration is preferable to draw route guidance information, such as the route or the current position, on the three-dimensional map by using the feature data.

A guidance information input may input at least one of route guidance information to be drawn, i.e., at least one of a route position and a current position, as three-dimensionally specified information including height. The drawer may draw a route by similar parallel projection of the specified information to parallel projection in generation of the feature data.

When only one of the road data and the route guidance information has height information, parallel projection may cause the route guidance information to be drawn out of the road. The system of this embodiment, however, ensures the same parallel projection for both the route guidance information and the road, thus allowing the route guidance information to be drawn without any deviation.

When road data is provided based on two-dimensional data that does not consider the undulation, the route guidance information may also be drawn based on two-dimensional data without parallel projection. In this case, it is preferable to provide features other than roads, for example, buildings, as data that does not consider the undulation.

The present invention is not limited to the three-dimensional map drawing system described above but may be configured by any of various other aspects.

For example, another aspect of the invention may be a feature data generating method that causes feature data used for drawing a three-dimensional map to be generated by the computer.

The feature data generating method provides a three-dimensional map database that stores in advance a three-dimensional model representing a three-dimensional shape of a feature. The three-dimensional map database may be provided in the computer that generates the feature data, maybe provided in the form stored in a medium, such as a DVD or may be stored in a server accessible by the computer via a network.

The computer inputs specification of a target area as an object of generating the feature data, and inputs a three-dimensional model that is located in the target area and an adjacent area in a predetermined range adjoining to the target area from the three-dimensional map database into a memory. The computer subsequently generates two-dimensional drawing data of a feature projected on a plane by parallel projection, from the three-dimensional model input in the memory, and stores the generated two-dimensional drawing data in the memory. The computer then extracts data in the specified target area from the two-dimensional drawing data, generates the feature data from the extracted data, and outputs the generated feature data.

As described above, the target of parallel projection according to the invention is the three-dimensional model that is located in not only the target area but in the adjacent area in the predetermined range adjoining to the target area. There is a possibility that parallel projection causes a feature that is located in a certain mesh to be drawn out of the certain mesh in the projection drawing. There is also a possibility that parallel projection causes a feature that is not located in the target area to be partly drawn within the target area in the projection drawing. By taking into account these possibilities, the method of the invention includes the adjacent area in the predetermined range adjoining to the target area as the target of parallel projection. This configuration provides a projection drawing of even the feature that is not located in the target area.

The predetermined range may be set according to the size of the mesh and the parallel projection parameters. The predetermined range should be narrowed at the projection angle closer to the vertical axis and widened at the projection angle closer to the horizontal axis.

The predetermined range may not be set evenly around the target area on the center. For example, projection from the easterly direction causes a projection drawing to be extended in the westerly direction. The feature that is located in a western mesh from the target area is accordingly not drawn in the target area in the projection drawing. By taking into account the projection direction, the predetermined range may be only the mesh in the direction having the possibility of drawing a feature, which is located in the mesh, in the target area, i.e., only the adjacent mesh on the side of the projection direction from the target area.

The invention may also be configured by a three-dimensional map drawing method that causes the computer to draw a three-dimensional map, as well as by a computer program that causes the computer to draw a three-dimensional map. The invention may further be configured by a computer readable storage medium, in which such a computer program is stored. The storage medium may be a flexible disk, a CD-ROM, a magneto-optical disk, an IC card, a ROM cartridge, a punched card, a printed matter with a barcode or another code printed thereon, any of internal storage devices (memories such as RAM and ROM) and external storage devices of the computer, or any of various other computer readable media.

BRIEF DESCRIPTION OF DRAWINGS

Fig. 1 illustrates an example of drawing a three-dimensional map by perspective projection;
Fig. 2 illustrates an example of drawing a three-dimensional map by parallel projection;
Fig. 3 illustrates the configuration of a three-dimensional map display system;
Fig. 4 illustrates the content of feature data;
Fig. 5 illustrates the data structure of feature data;
Fig. 6 illustrates the relationship between projection angle and drawing result;
Fig. 7 illustrates projection directions of parallel projection;
Fig. 8 illustrates the level structure of feature data;
Fig. 9 illustrates one modification of the level structure of feature data;
Fig. 10 illustrates a feature data generating method;
Fig. 11 is a flowchart showing a procedure of feature data generating process;
Fig. 12 illustrates linkage of feature data with character data;
Fig. 13 illustrates the content of a behind flag;
Fig. 14 is a flowchart showing a procedure of map display process;
Fig. 15 illustrates an output example of a three-dimensional map according to an embodiment;
Fig. 16 is a flowchart showing a procedure of route guidance process;
Fig. 17 is a flowchart showing a procedure of display area determination process;
Fig. 18 illustrates the effect of undulation;

Fig. 19 illustrates a coordinate transformation method by taking into account the undulation;
Fig. 20 is a flowchart showing a procedure of coordinate transformation process; and
Fig. 21 illustrates an example of route guidance.

DESCRIPTION OF EMBODIMENTS

Some embodiments of the invention are described in the following sequence:

A. Device Configuration
B. Feature Data Structure

B1. Data by Parallel Projection
B2. Plurality of Projection Directions
B3. Level Structure

C. Feature Data Generating Method
D. Character Data Structure
E. Map Display Process
F. Route Guidance Process

F1. General Processing
F2. Coordinate Transformation

Embodiment 1

A. Device Configuration

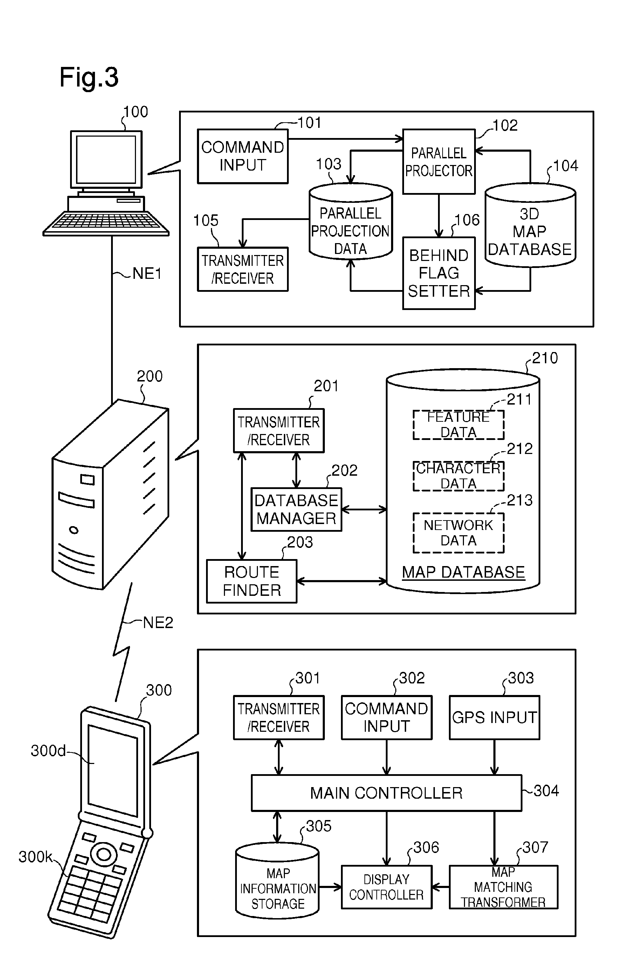

Fig. 3 illustrates the configuration of a three-dimensional map display system according to one embodiment. In the illustrated configuration, a map is displayed on a cell phone 300, based on map data provided from a server 200 via a network NE2. The map may be displayed on another terminal, such as a personal computer or a navigation system. The three-dimensional map display system is not limited to the system including the terminal such as the cell phone 300 and the server 200 but may be provided as a standalone system.
The illustrated configuration also includes a data generation device 100 of generating three-dimensional map data.
The cell phone 300 has various functional blocks working under a main controller 304. The main controller 304 and the respective functional blocks are provided by installing software that implements the respective functions according to this embodiment, but part or all of such functional blocks may be provided by hardware configuration.
A transmitter/receiver 301 makes communication with the server 200 via the network NE2. According to this embodiment, map data for displaying a three-dimensional map and commands are mainly transmitted and received by communication.
A command input 302 enters the user's instructions through the operations of a keyboard 300k. According to this embodiment, the instructions may include specifying the display area and the scaling of a three-dimensional map and setting the place of departure and the destination in route guidance.
A GPS input 303 obtains the coordinates values of latitude and longitude, based on GPS (Global Positioning System) signals. In the route guidance, the direction of movement is also computed based on a variation of the latitude and the longitude.
A map information storage 305 is provided as a buffer to temporarily store map data provided from the server 200. When the map to be displayed changes continually as in the route guidance, map data that is not obtainable from the map information storage 305 is received from the server 200 to display the map.
A map matching transformer 307 makes the coordinate values of the route positions and the current positions subjected to required coordinate transformation, in order to display the found route and the current position with accuracy on the roads of the three-dimensional map displayed by parallel projection during the route guidance. The method of coordinate transformation will be described later.
A display controller 306 displays a three-dimensional map on a display 300d of the cell phone 300, based on data provided from the map information storage 305 and the map matching transformer 307.
The server 200 has illustrated functional blocks. These functional blocks are provided by installing software that implements the respective functions according to this embodiment, but part or all of such functions may be implemented by hardware configuration.
A map database 210 is provided as a database for displaying three-dimensional maps. According to this embodiment, map data including feature data 211, character data 212 and network data 213 are stored in the map database 210. The feature data 211 are used to display features, such as roads and buildings, three-dimensionally and are provided as two-dimensional polygonal data obtained by parallel projection of the three-dimensional model of the features. The character data 212 represent letters and characters to be displayed on the map, for example, the names of the features and the place names. The network data 213 represent the roads expressed by a set of nodes and links. The nodes are provided as data corresponding to the intersections of the roads and the end points of the roads. The links are lines interconnecting the nodes and are provided as data corresponding to the roads. According to this embodiment, the positions of the nodes and the links included in the network data 213 are specified by three-dimensional data of the latitude, the longitude and the height.
A transmitter/receiver 201 sends and receives data to and from the cell phone 300 via the network NE2. According to this embodiment, map data for displaying a three-dimensional map and commands are mainly transmitted and received. The transmitter/receiver 201 also makes communication with the data generation device 100 via a network NE1. According to this embodiment, generated map data are mainly sent and received by communication.

A database manager 202 controls reading and writing data from and into the map database 210.

A route finder 203 uses the network data 213 in the map database 210 for route search. The Dijkstra's algorithm may be employed for route search.

The data generation device 100 has illustrated functional blocks. These functional blocks are provided by installing software that implements the respective functions in the personal computer according to this embodiment, but part or all of such functions may be implemented by hardware configuration.

A transmitter/receiver 105 sends and receives data to and from the server 200 via the network NE1.

A command input 101 enters the operator's instructions through the operations of, for example, a keyboard. According to this embodiment, the instructions include specifying a target area for generation of map data and specifying parallel projection parameters.

A 3D map database 104 is provided as a database for storing the three-dimensional model used to generate map data. Electronic data representing the three-dimensional shapes of features such as roads and buildings are stored in the 3D map database 104. The 3D map database 104 may utilize the three-dimensional model generally provided for displaying a three-dimensional map by perspective projection.

A parallel projector 102 generates feature data by parallel projection drawing based on the 3D map database 104. The projection drawings are stored as parallel projection data 103 and are eventually stored via the transmitter/receiver 105 as the feature data 211 into the map database 210 of the server 200. The parallel projector 102 determines whether each feature is located in a blind spot of another feature in the course of parallel projection process and transfers the result of determination to a behind flag setter 106.

The behind flag setter 106 inputs character data representing the name of each feature from the 3D map database 104 and sets a behind flag that specifies whether the character string is to be displayed or hidden on the map, based on the result of determination received from the parallel projector 102. The behind flag is set to a value representing hidden characters when the feature is located in a blind spot of another feature, while being set to a value representing display characters when the feature is not located in a blind spot of another feature. According to this embodiment, feature data 211 are prepared with respect to a plurality of projection directions. The blind spot depends on the projection direction, so that the behind flag is set for each projection direction.

B. Feature Data Structure

B1. Data by Parallel Projection

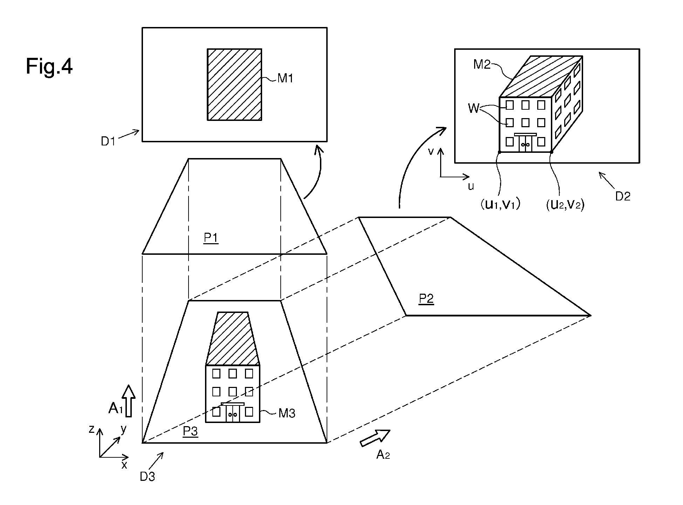

Fig. 4 illustrates the content of feature data. Data D1 and D2 are obtained from three-dimensional data D3 by parallel projection. The three-dimensional data D3 represents the shape of a building M3 by three-dimensional coordinates x, y, z on a plane P3.

Parallel projection of this building M3 on a plane P1 in the vertical direction (direction of arrow A1 in the drawing) provides the data D1 representing the building M3 two-dimensionally as a rectangle M1. This corresponds to general two-dimensional map data.

According to this embodiment, on the other hand, the building M3 is projected on a plane P2 in an oblique direction (direction of arrow A2 in the drawing) that is inclined by a predetermined projection angle to the vertical direction by parallel projection. The resulting data D2 represents the building M3 three-dimensionally as a building M2. Although the building M2 is expressed three-dimensionally, the data D2 is the projected two-dimensional drawing data. According to this embodiment, polygonal data for drawing the building M2 are specified by a sequence of points, such as coordinate values (u1,v1) and (u2,v2), in the uv coordinates in the projection plane. The side walls and the roof of the building M2 may be provided as separate polygonal data, or alternatively the whole building M2 may be provided as integral polygonal data. Windows W may be provided as textures to be attached to the wall surfaces of the building, i.e., raster data, or may alternatively be provided as separate polygonal data.

The feature data of this embodiment is constructed by two-dimensional data obtained by projecting each feature by parallel projection in the oblique direction as described above.

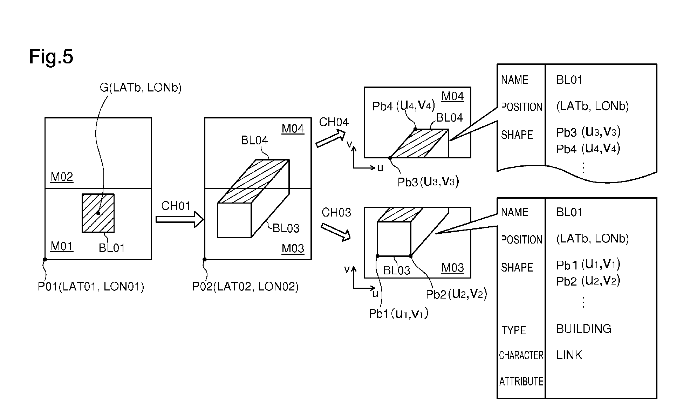

Fig. 5 illustrates the data structure of feature data. The following describes the data structure of one building BL01 as an example.

The leftmost drawing shows the positional relationship of this building BL01 two-dimensionally. Map data are divided into two meshes M01 and M02. The building BL01 is expressed by a rectangle in the mesh M01 having the latitude and the longitude at the lower left corner defined by coordinates P01(LAT01,LON01). The building BL01 has the latitude and the longitude defined by coordinates G(LATb,LONb). In this illustrated example, the building BL01 is not extended out of the mesh M01.

Parallel projection (arrow CH01) of the building BL01 located at this position causes the building BL01 to be drawn three-dimensionally as shown in meshes M03 and M04. According to this embodiment, the latitude and the longitude P02(LAT02,LON02) at the lower left corner is identical with the latitude and the longitude P01 of the mesh M01. In other words, the meshes M03 and M04 are defined to have the latitudes and the longitudes of the respective apexes that are identical with the latitudes and the longitudes of the respective apexes of the meshes M01 and M02 on the plane. Alternatively the meshes M03 and M04 on the projection plane may be set independently of the meshes M01 and M02 on the plane.

As the result of parallel projection, the building BL01 is drawn by a part BL04 in the mesh M04, in addition to a part BL03 in the mesh M03. According to this embodiment, as shown by arrows CH03 and CH04, a polygon of one building BL01 is divided into the part BL03 belonging to the mesh M03 and the part BL04 belonging to the mesh M04, which are managed as separate polygonal data.

The rightmost drawings illustrate the structures of the respective polygonal data. The name, the position, the shape, the type, the character, and the attribute are stored as data of each polygon.

According to this embodiment, the name is the name of the building BL01. The common name is assigned to the part BL03 belonging to the mesh M03 and the part BL04 belonging to the mesh M04, so that these two parts BL03 and BL04 are identifiable as polygons related to one identical building. Alternatively the name may be a proper name of each polygon. In this case, it is preferable to provide additional information interlinking the polygons related to one identical building.

The position is the latitude and the longitude expressed by the coordinates (LATb, LONb) where the building BL01 is located. The shape is data on the sequence of points forming the polygon in the relative two-dimensional coordinates uv defined in each mesh. The shape data regarding the part BL03, such as Pb1(u1,v1) and PB2(u2,v2) are the uv coordinate values in the mesh M03 representing the positions of apexes Pb1 and Pb2. The shape data regarding the part BL04, such as Pb3 (u3,v3) and Pb4(u4,v4) are the uv coordinate values in the mesh M04 representing the positions of apexes Pb3 and Pb4.

The type of the feature represented by the polygon is stored as the type. The character is data representing the name of the feature. Since the character data is provided separately from the feature data according to the embodiment, data representing the storage link of the character data (LINK in the illustrated example) is stored as the character of the feature data. The data representing the storage link may be a path, an address, or a URL (Uniform Resource Locator) of the character data relating to the building BL01.

The attribute is additional information regarding the feature. For example, the height and the number of stories may be the attribute of the building, and the lane width and the road type such as national road may be the attribute of the road.

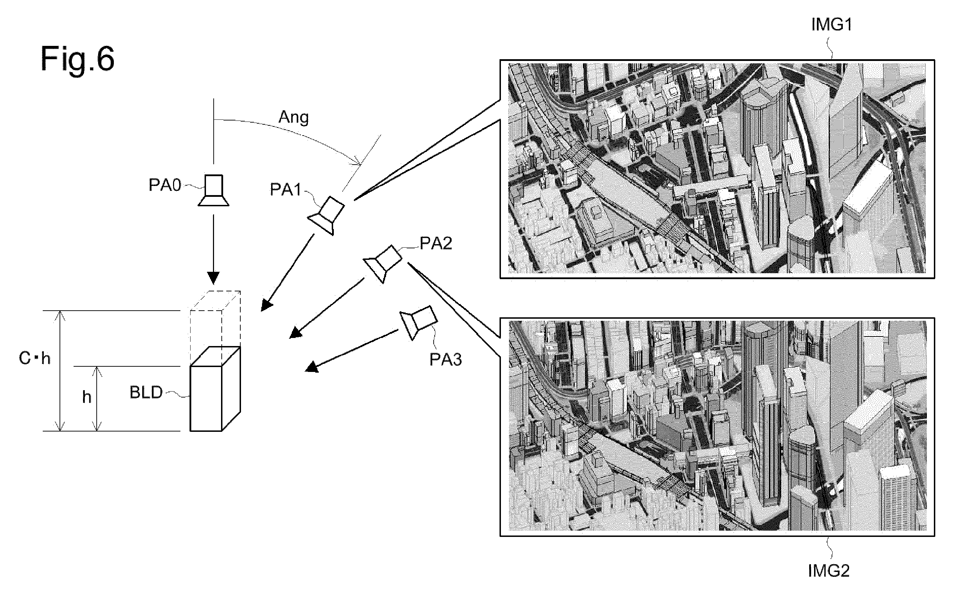

Fig. 6 illustrates the relationship between the projection angle and the drawing result. As described previously, data of projection drawing obtained by parallel projection of features is used as feature data according to the embodiment. The projection angle and the projection direction may be set arbitrarily as parameters of parallel projection. As shown in the left drawing, the projection angle Ang is set to increase at the position closer to the horizontal axis, wherein the projection angle from the vertical direction (PA0) is set to 0 degree. The projection angle Ang accordingly increases in the order of PA0< PA1< PA2< PA3.

The upper right drawing IMG1 is the parallel projection drawing at the projection angle PA1. The lower right drawing IMG2 is the parallel projection drawing at the projection angle PA2. At the smaller projection angle Ang, the positional relationship between buildings is easily understandable like the plane map as shown in the drawing IMG1. At the larger projection angle Ang, on the other hand, the shape of each building is intuitively understandable as shown in the drawing IMG2. The projection angle may be set by taking into account such visual effects. Alternatively, a plurality of feature data at different projection angles may be provided to allow the user's selection.

According to this embodiment, the actual building is not directly projected by parallel projection but is projected by parallel projection after multiplication of a factor that is greater than 1 only in the height direction. As shown in the left drawing, parallel projection of a virtual building of a height C·h obtained by multiplying the actual height h of a building BLD by a factor C gives the right drawings IMG1 and IMG2.

The user generally looks up the building. Parallel projection of the overhead view may cause the sense of height from the projection drawing of the building to differ from the sense of height from the actual look-up view of the building. Parallel projection of the virtual building enlarged only in the height direction by multiplication of the factor C as described above, on the other hand, relieves such feeling of strangeness in sense of height.

The factor C may be set arbitrarily by taking into account the visual effects. As clearly understood from the comparison between the drawings IMG1 and IMG2, the sense of height of the building is also affected by the projection angle Ang. In parallel projection at a plurality of different projection angles Ang, the factor C may be changed according to the projection angle Ang. When the feeling of strangeness is negligible, parallel projection may be performed without multiplication of the factor.

B2. Plurality of Projection Directions

The parallel projection parameters include the projection angle and the projection direction. The projection angle is the parameter representing the inclination of the projecting direction relative o the vertical direction as described in Fig. 6. The projection direction is the parameter representing the direction of this inclination. The feature data may be provided with respect to a single direction, but is provided with respect to a plurality of directions according to this embodiment.

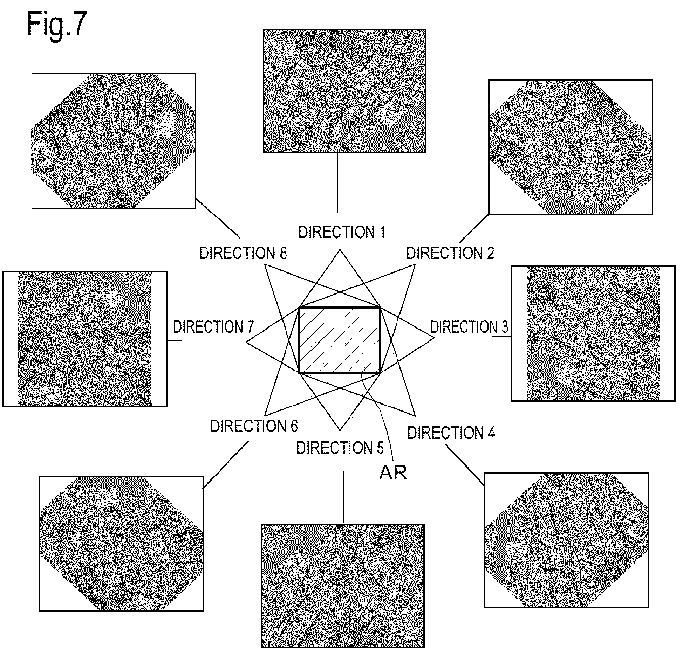

Fig. 7 illustrates projection directions of parallel projection. As illustrated, feature data are generated by parallel projection of one area AR with respect to eight directions at intervals of 45 degrees, i.e., direction 1 to direction 8. For example, the projection drawing in the direction 1 is parallel projection of the northern view, while the projection drawing in the direction 5 is parallel projection of the southern view. The building located in the blind spot in the direction 1 is not located in the blind spot in the opposite direction 5 but is drawn. Providing feature data with respect to the plurality of directions enables the geography in the blind spot in the map of one direction to be observed in the map of a different direction. This relieves the problem caused by the presence of the blind spot in three-dimensional display.

The feature data are provided with respect to eight directions according to this embodiment, but may be provided with respect to four directions or with respect to sixteen or a greater number of directions. According to the results of the inventors' examination, when feature data are provided with respect to sixteen directions and the projection drawings in the respective directions are sequentially changed over, the resulting display causes the user to feel like looking at the area AR while moving around the area AR. From this standpoint, it may be preferable to provide the feature data with respect to sixteen directions.

B3. Level Structure

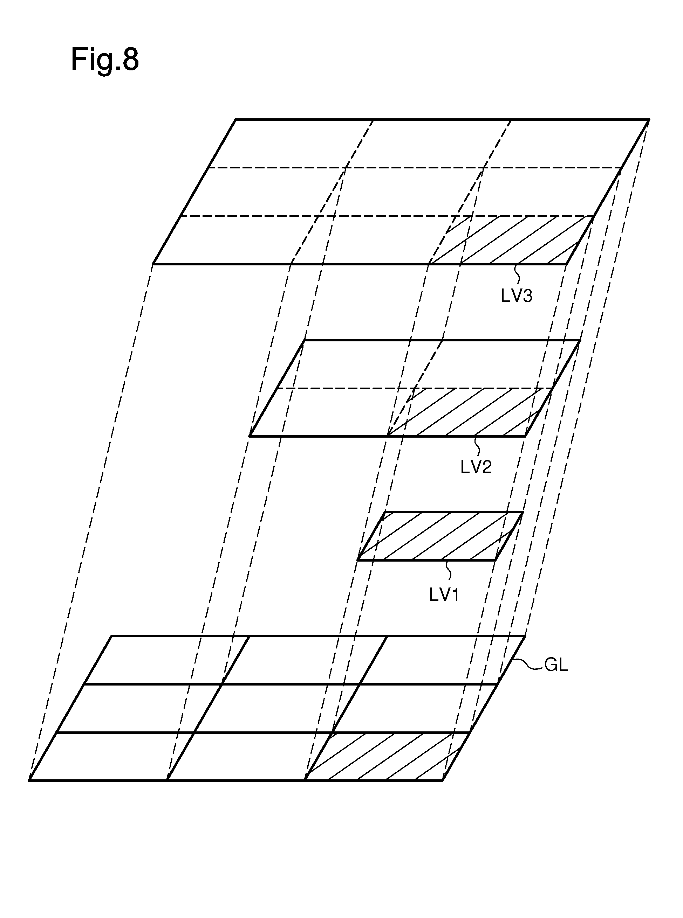

Fig. 8 illustrates the level structure of the feature data. According to this embodiment, the feature data and the character data are both structured in a plurality of levels. Level LV1 is data for displaying a narrow area in detail. Level LV3 is data for displaying a wide area efficiently by reducing the number of features as the drawing object. Level 2 is data for drawing a middle area between the levels LV1 and LV3. These levels may be selectively used according to the scaling of the map to be displayed. The number of levels is not limited to three levels but may be two levels or four or more levels.

According to this embodiment, the same parallel projection parameters are employed for parallel projection in all the levels LV1 to LV3. As illustrated, a specific area (hatched area) on a ground level GL is projected similarly in any of the levels LV1 to LV3. Even when the level is changed according to the scaling of the map display, the area in the current level corresponding to the display area in the previous level can be readily identified. This accordingly enables the smooth display by the relatively simple processing.

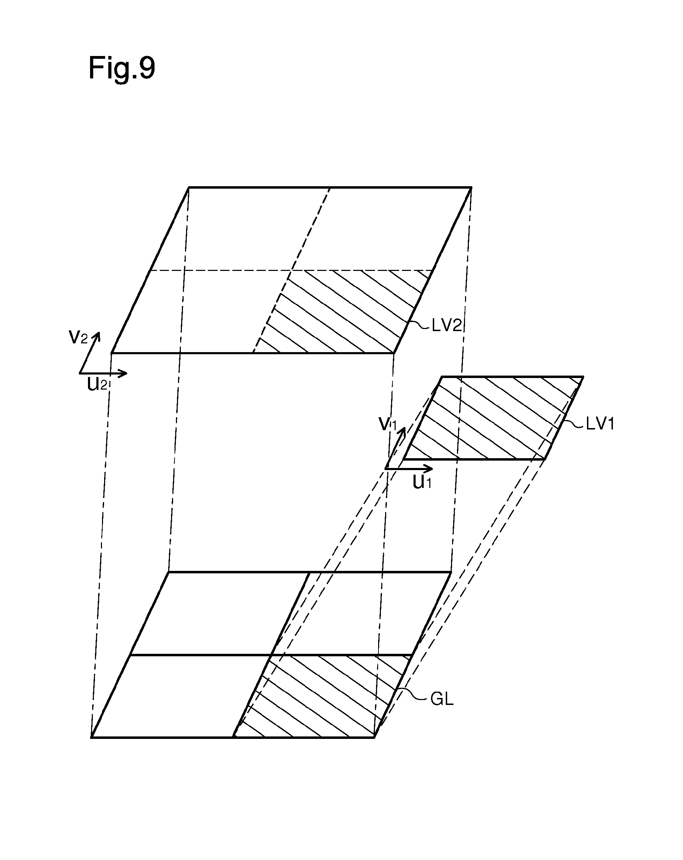

Fig. 9 illustrates one modification of the level structure of the feature data. In the illustrated example, different parallel projection parameters are employed for the low level LV1 and the middle level LV2. While the larger projection angle (closer to the horizontal axis) is employed for projection in the low level LV1, the smaller projection angle (closer to the vertical axis) is employed for projection in the middle level LV2.

As a result, the low level LV1 and the middle level LV2 have different coordinate systems, i.e., coordinate system u1,v1 and coordinate system u2,v2. It is accordingly difficult to identify the area in each level corresponding to the hatched area on the ground level GL. When the display is changed from the low level LV1 to the middle level LV2 in this state, the process is required to specify the area on the ground level GL corresponding to the display area in the low level LV1 and subsequently identify the area in the middle level LV2 corresponding to the specified area.

When such processing load is acceptable, the parallel projection parameters may be changed as shown in Fig. 9. For example, employing the smaller projection angle (closer to the vertical axis) in the wider level enables the drawn map to approach to the plane map. This configuration enables the advantages of the plane map and the advantages of the three-dimensional map to be selectively used by changing the level.

C. Feature Data Generating Method

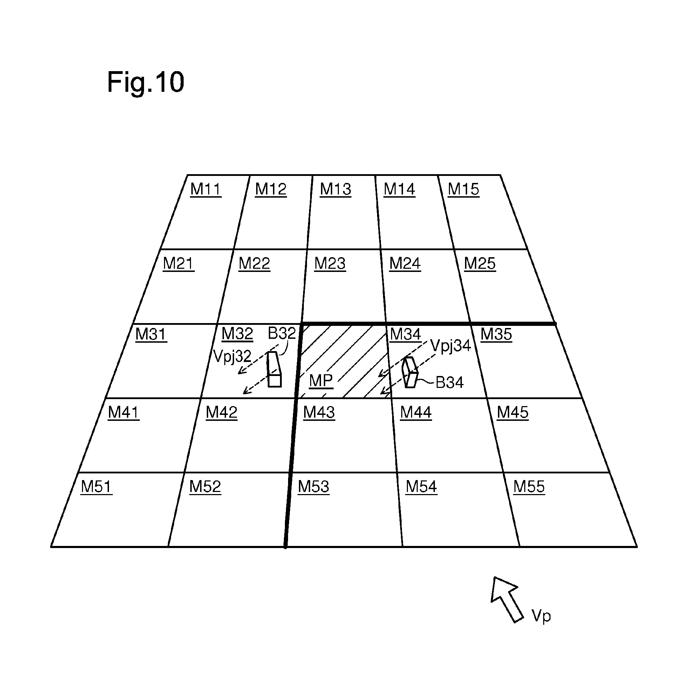

Fig. 10 illustrates a feature data generating method. The procedure of this embodiment generates feature data by parallel projection of three-dimensional feature data included in the 3D map database. In the case of generation and management of map data divided in meshes, however, adequate feature data cannot be obtained by parallel projection only in the mesh unit.

The following describes generation of feature data corresponding to a hatched mesh MP in Fig. 10. In the 3D map database, meshes M11 to M55 including various features are present around the mesh MP as illustrated. A feature B34 located in a mesh M34 adjacent to the mesh MP is projected by parallel projection. Parallel projection in the direction shown by an arrow Vpj34 causes the upper portion of the feature B34 to be projected in the mesh MP. In generation of feature data by parallel projection, part of a feature that is not located in the mesh MP as the processing object may be projected in the mesh MP. Parallel projection in the mesh unit may thus generate the projection drawing including a partially missing feature that is located in another mesh, thus not allowing adequate feature data to be obtained.

The procedure of this embodiment, on the other hand, reads three-dimensional feature data of adjacent meshes (M22, M23, M24, M25, M32, M34, M42, M43 and M44) adjoining to the mesh MP as the processing object and further adjacent meshes (M11 to M15, M21, M25, M31, M35, M41, M45 and M51 to M55) adjoining to the adjacent meshes during processing of the mesh MP. The procedure then projects all the meshes M11 to M55 by parallel projection and cuts out a polygon corresponding to the mesh MP to generate feature data. This enables parallel projection of the feature B34 located in the adjacent mesh M34 during processing of the mesh MP, thus obtaining the feature data without missing of the upper portion.

The procedure of the embodiment uses the meshes located within the two mesh-range from the mesh MP as the processing object as described above, but the range used for generation of feature data may be set arbitrarily. When the size of each mesh is sufficiently larger than the sizes of features and there is substantially no possibility that a feature located in a next but one mesh is projected in the mesh as the processing object, the range of parallel projection may be only the meshes directly adjacent to the mesh as the processing object, i.e., the one mesh-range. When the size of each mesh is relatively small to the sizes of features, on the other hand, the range of parallel projection may be the three mesh-range or the wider range.

The range of parallel projection may be not arranged evenly around the mesh MP as the processing object, but may be localized by taking into account the projection direction. For example, during parallel projection in the direction shown by the arrow Vpj34 shown in Fig. 10, a feature B32 located in the adjacent mesh M32 on the left side of the mesh MP is projected in the direction of an arrow Vpj32 and is thereby drawn on the left side of the feature B32 in the projection drawing. In this projection direction, the feature B32 cannot be projected in the mesh MP. It is accordingly not necessary to use the mesh M32 for parallel projection during processing of the mesh MP. Similarly, during parallel projection in the projection direction shown by an arrow Vp in Fig. 10, an area encircled by the thick line (meshes M34, M35, M43 to M45 and M53 to M55) is sufficient as the range of parallel projection.

In this manner, the range of parallel projection may be localized on the side of the projection direction from the mesh MP as the processing object.

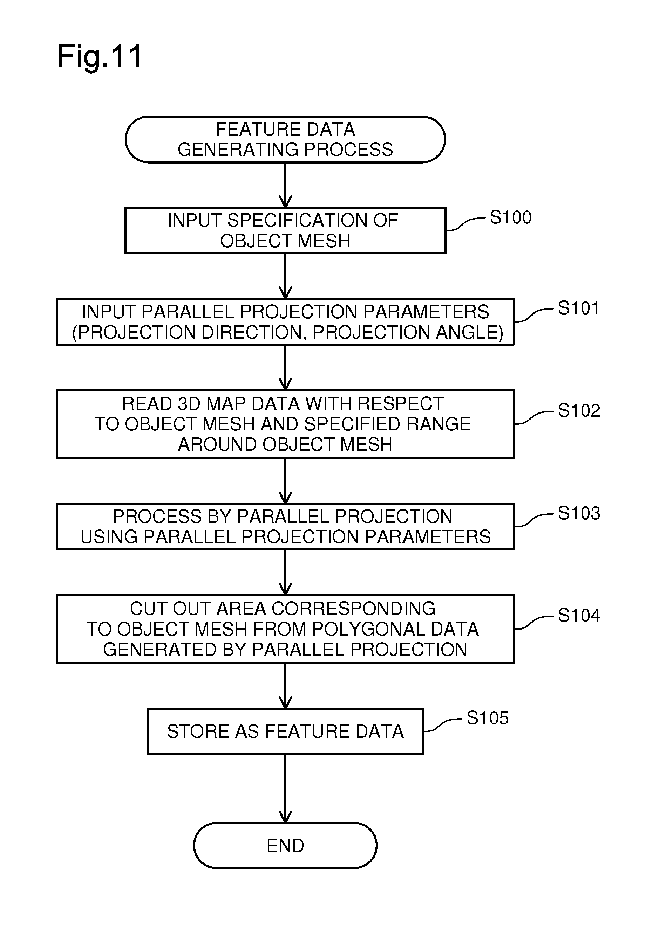

Fig. 11 is a flowchart showing a procedure of feature data generating process. The feature data generating process is performed by the parallel projector 102 of the data generation device 100 (Fig. 3) and, as the hardware element, by the CPU of the personal computer serving as the data generation device 100.

On the start of processing, the CPU inputs specification of a mesh as the processing object (step S100). This step corresponds to specification of the mesh MP in Fig. 10. The mesh may be specified by using, for example, an index inherent to the mesh or the coordinates of the mesh. The data generation device 100 may analyze a mesh including the coordinate values of points on the map specified by the operator and set the analyzed mesh as the processing object.

The CPU subsequently inputs parallel projection parameters, i.e., projection direction and projection angle (step S101). The parallel projection parameters may be specified by the operator every time feature data is generated. Alternatively default parallel projection parameters may be set in advance in the data generation device 100.

The CPU then reads 3D map data with respect to the object mesh and peripheral meshes in a specified range around the object mesh (step S102). The procedure of this embodiment reads 3D map data with respect to the meshes within the two-mesh range from the object mesh MP as shown in Fig. 10. This range is set arbitrarily as described in Fig. 10. The read 3D map data is temporarily stored in the memory of the data generation device 100.

The CPU then processes the read 3D feature data by parallel projection using the parallel projection parameters input at step S101 (step S103). This processing gives a projection drawing where the respective features are drawn three-dimensionally by parallel projection. According to this embodiment, the drawing result is temporarily stored as two-dimensional polygonal data in the memory of the data generation device 100. Alternatively the drawing result may be stored as raster data.

On completion of parallel projection, the CPU cuts out an area corresponding to the object mesh from the generated polygonal data (step S104). With respect to a polygon drawn across a plurality of meshes, only a part located in the object mesh is extracted and is set as new polygonal data as described in Fig. 5. Various data, such as the name, the position and the shape, shown in Fig. 5 are correlated to each polygon in this cut-out step.

The CPU then stores the cut-out area as feature data (step S105). The procedure sends data as well as an instruction for storage into the feature data 211 to the server 200 (Fig. 3).

Repeating this series of processing with respect to all the meshes, the feature data 211 of this embodiment is obtained.

D. Character Data Structure

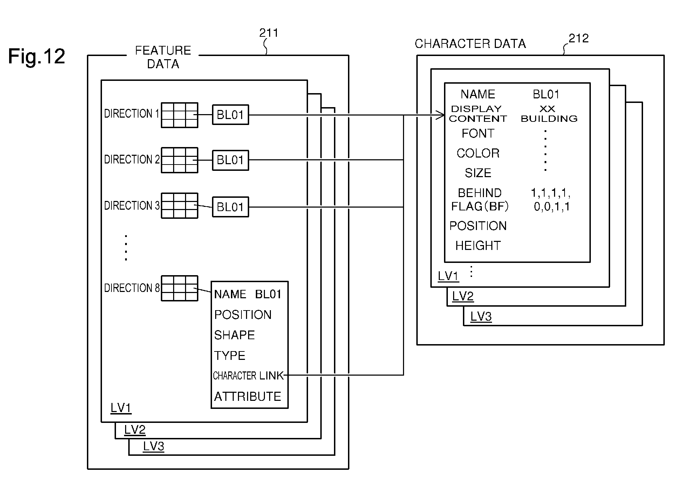

Fig. 12 illustrates linkage of the feature data with the character data. The left drawing schematically shows the structure of the feature data 211. As described in Fig. 8, the feature data is divided into the levels LV1 to LV3 and is further divided into the direction 1 to the direction 8 in each level as described in Fig. 7. As illustrated, a record corresponding to a feature having the name BL03 is commonly included in the feature data of the direction 1 to the direction 8 in the level LV1. The record corresponding to this feature is also present in the feature data in the levels LV2 and LV3. According to this embodiment, the record corresponding to one identical feature is present redundantly in the feature data of different levels and different directions as described above.

A plurality of character records that record character information representing the names of the respective features are stored in the character data. The character records are also provided in the respective levels according to this embodiment.

Information LINK on the storage location of the character record indicating the name of the feature is recorded in each record of the feature data. According to this embodiment, one character record is commonly used for feature data with respect to a plurality of directions in each level. The information LINK of the same content is accordingly stored in the feature BL03 in the level LV1. The arrow in the drawing shows mapping of one character record to a plurality of feature records.

Pieces of information, such as the name, the display content, the font, the color, the size, the behind flag, the position and the height are stored in the character record.

The name is the name of a feature corresponding to the character record and may be the name of a polygon representing the feature. When one feature is drawn by a plurality of polygons as illustrated in Fig. 5, the names of the plurality of polygons are stored.

The display content is a character string representing the name of a feature. The font, the color and the size are information defining the display mode of the character string.

The behind flag is a flag controlling approval or disapproval of character display, and is set corresponding to the direction of the feature data. In the illustrated example, the behind flag is set as "1,1,1,1,0,0,1,1". This means that the character is to be displayed (setting= 1) for the directions 1 to 4 and the directions 7 and 8 and the character is to be not displayed (setting= 0) for the directions 5 and 6. The method of setting the behind flag will be described later.

The position represents the coordinates where the character is displayed and may be equal to the coordinates of the representative point of the corresponding feature, i.e., may be the same value as that of the "position" information of the feature data.

The height represents the height where the character is to be displayed. The height may be expressed in a unit of length such as in meters, or may be expressed as the pixel value in display or the number of stories of the feature.

Specifying the height information enables the character to be displayed at the higher position than the ground level of the feature and thereby ensures the easy-to-understand display of the relationship between the character and the feature. The height is a common value set for all the directions according to the embodiment, but may be separately set for the respective directions like the behind flag.

The character data is provided for each level according to this embodiment but may be commonly provided for all the levels. In the latter case, a flag controlling display/non-display of character data may be set for each level. The similar format to that of the behind flag may be employed for this flag.

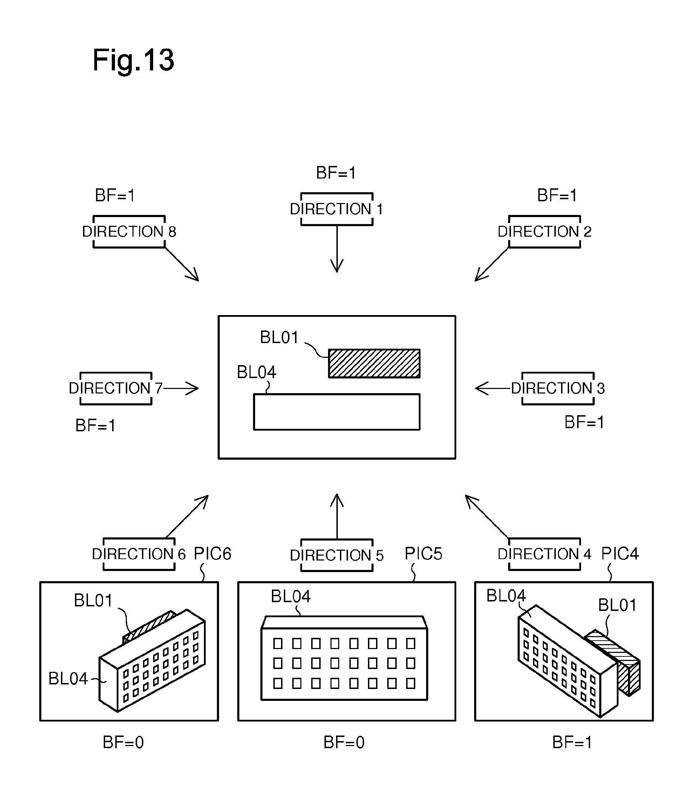

Fig. 13 illustrates the content of the behind flag. The center drawing shows the arrangement of two features, i.e., buildings BL03 and BL04, two-dimensionally. Fig. 13 also shows the settings of the behind flag (BF) for the building BL01 with respect to the respective directions.

When the buildings BL01 and BL04 are projected by parallel projection from the direction 1, the building BL01 is not in the blind spot of the building BL04 but is visually recognizable. In the direction 1, there is no problem in display of the character representing the name of the building BL01 on the map, so that the behind flag BF is set to "1" representing character display. The same applies to the directions 2, 3, 7 and 8.

The lower right projection drawing PIC4 is the parallel projection drawing from the direction 4. As illustrated, the building BL01 is not in the blind spot of the building BL04. The behind flag BF is accordingly set to "1".

The lower center projection drawing PIC5 is the parallel projection drawing from the direction 5. In this state, the building BL01 is in the blind spot of the building BL04. Displaying the name of the building BL01 in this state makes the user confused what building the name indicates. The character of the building BL01 is accordingly to be not displayed in this state, so that the behind flag BF is set to "0" representing non-display.

The lower left projection drawing PIC6 is the parallel projection drawing from the direction 6. In this state, the upper portion of the building BL01 is slightly observed as illustrated. The behind flag may be set either of display/non-display when the building is partly observable. In the illustrated example, since only a little portion of the building is observed, so that the behind flag BF is set to "0" representing non-display. Alternatively the behind flag BF may be set to "1", since even a portion of the building BL03 is observable.

Fig. 13 illustrates the settings of the behind flag for the building BL01. The behind flag may similarly set for the building BL04. In the illustrated state of Fig. 13, it is reasonable that the behind flag for the building BL04 is set to "1" representing display with respect to all the direction.

The location in the blind spot depends on the height of the building, as well as the planar positional relationship of the buildings. It is accordingly preferable to set the behind flag, based on the result of parallel projection. In the illustrated example of Fig. 13, when the height of building BL01 is sufficiently higher than the height of the building BL04, the behind flag BF may be set to "1" with respect to all the directions.

The behind flag may be set manually by the operator or may be set automatically based on the determination of whether each feature is in the blind spot of another feature in parallel projection of the feature in the feature data generating process (Fig. 11). The setting of the behind flag for the partly observable feature like the building BL03 in the direction 6 of Fig. 13 may be determined as follows:

> (1) to be displayed when the area of the drawn part is not less than a predetermined level;
> (2) to be displayed when the area of the drawn part is not less than a predetermined ratio of the building BL01;
> (3) to be displayed when part or all of the ground level of the building BL01 is drawn; and
> (4) to be displayed when the drawn part is not less than a predetermined number of stories.

E. Map Display Process

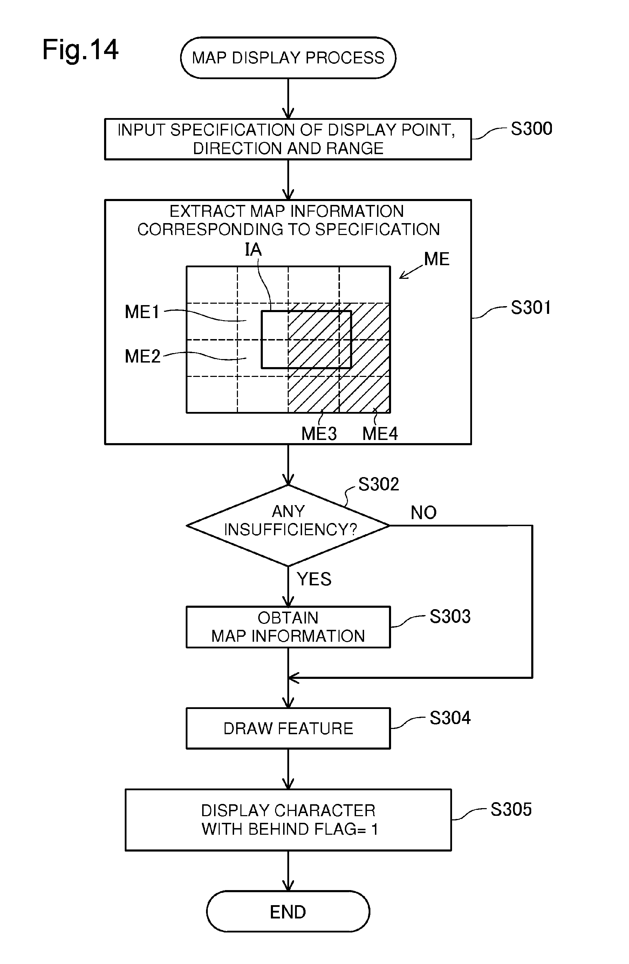

Fig. 14 is a flowchart showing a procedure of map display process. According to this embodiment, the map display process is performed by the main controller 304 and the display controller 306 of the cell phone 300 and, as the hardware element, by the CPU of the cell phone 300.

In this process, the CPU first inputs specification of the display position, the direction and the range (step S300). The user may specify these parameters through the operation of the keyboard or the current position obtained by GPS may be used as the display position.

The CPU extracts map information corresponding to the specification from the map information previously obtained in the previous cycle of the map display process and stored in the cell phone 300 (step S301). The map information is the collective designation of various data required for displaying a map, such as feature data, character data and network data.

An example of such extraction is illustrated in the drawing. A hatched area in map information ME divided in meshes represents map information previously stored in the cell phone 300. An area IA represents a range corresponding to the user's specification. A part of the stored map information overlapping with the area IA, i.e., a part other than meshes ME3 and ME4, is extracted in this illustrated example.

The meshes M3 and ME4 that do not overlap with the area IA may be deleted as unnecessary information or may be left within the allowable memory capacity of the cell phone 300.

When the extracted map information is insufficient to display the map (step S302), the CPU obtains map information corresponding to the insufficient part from the server 200 (step S303). In the illustrated example, meshes ME1 and ME2 are insufficient to display the area IA, so that map information corresponding to these meshes ME1 and ME2 is obtained.

After obtaining the map information, the CPU draws the feature (step S304). According to this embodiment, feature data is two-dimensional polygonal data generated by parallel projection, so that the three-dimensional map can be displayed by drawing a polygon according to the obtained feature data.

The general method of drawing a three-dimensional map uses a three-dimensional model and generates a perspective projection drawing by rendering process. While this method has extremely heavy processing load for rendering, the method of this embodiment has the significant advantage of drawing a three-dimensional map by extremely light load.

The CPU then displays the character with the behind flag set to 1 in the map (step S305). Displaying the character may be performed simultaneously with drawing the feature (step S304).

The display position of the character in the displayed map may be set by the following procedure.

Since the latitude and the longitude are known for each apex in each of the meshes constituting the feature data, the procedure first specifies a point in the mesh corresponding to the position information (latitude and longitude) included in the character record. The uv coordinate values specified in each mesh may be determined according to the latitude and the longitude included in the character record by interpolating the latitudes and the longitudes of the apexes of the mesh.

The procedure then shifts the display position of the character in the u-axis direction according to the height information. When the height information is specified by the pixel value in display, the specified value is used directly. When the height information is specified in meters or by the number of stories, the specified value may be converted into the pixel value by multiplying a factor corresponding to the projection angle.

The procedure of this embodiment uses the behind flag to display the character only for the feature that is not in the blind spot. The behind flag is set with respect to each direction, so that display/non-display of the character may be changed according to the specified direction.

The general method of rendering the three-dimensional model determines whether a feature is in the blind spot and controls display/non-display of the character in the course of rendering process. This causes extremely heavy processing load for controlling display/non-display of the character. The procedure of this embodiment, on the other hand, has significant advantage of controlling display/non-display of the character by extremely light load.

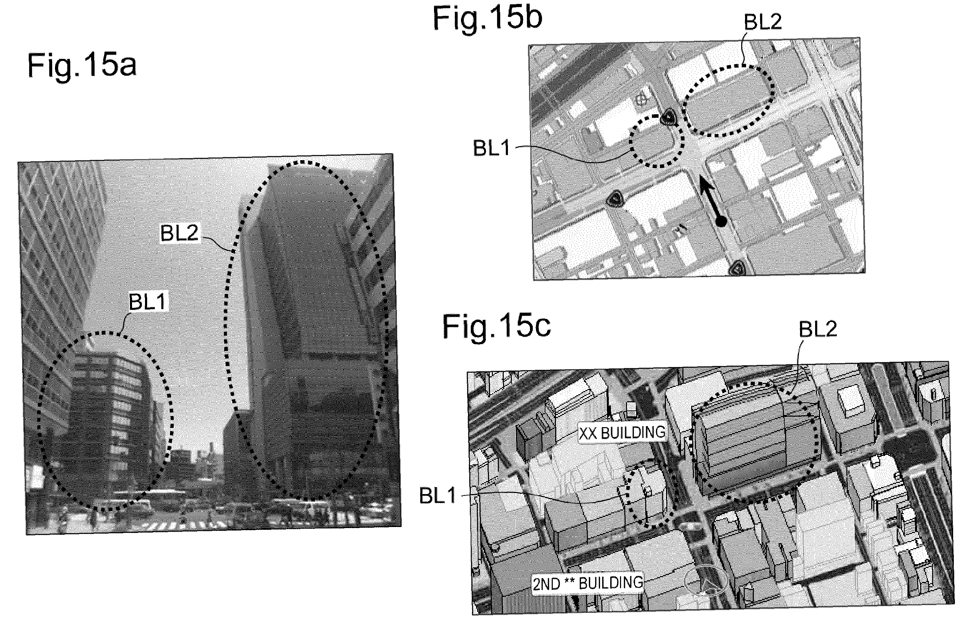

Fig. 15 illustrates an output example of a three-dimensional map of a specific area corresponding to the photograph of Fig. 15a according to the embodiment. Fig. 15a also shows an output example of a three-dimensional map by general perspective projection. The display of Fig. 15a enables the user to readily perceive the shapes of buildings BL1 and BL2. The user standing at the spot can intuitively and immediately recognize the buildings BL1 and BL2. The display of Fig. 15a, however, does not allow the user to understand the positional relationship between these two buildings BL1 and BL2 or the distances to other distant buildings.

Fig. 15b shows an output example of a two-dimensional map. The buildings BL1 and BL2 of Fig. 15a are encircled by the dotted lines in Fig. 15b. The two-dimensional map enables the user to readily understand the positional relationship between the buildings BL1 and BL2. The user standing at the spot cannot, however, intuitively perceive that these illustrated features correspond to the buildings BL1 and BL2 of Fig. 15a.

Fig. 15c shows an output example of this embodiment. The buildings BL1 and BL2 are also encircled by the dotted lines in Fig. 15c. The map of this output example is drawn by parallel projection with the scale of the map unchanged. This map enables the user to understand the positional relationship between the buildings BL1 and BL2 and the distances to distant buildings at substantially the same level as the two-dimensional map (Fig. 15b).

The map of Fig. 15c displays the features three-dimensionally, thus allowing the user to intuitively perceive the shapes of the buildings BL1 and BL2. While the map of Fig. 15c is drawn in the look-down manner, the user actually standing at the spot looks up the buildings BL1 and BL2 as shown in Fig. 15a. The user can still intuitively recognize the buildings BL1 and BL2, based on the display of Fig. 15c.

The three-dimensional map display of this embodiment employs parallel projection to have both the advantage of the two-dimensional map that keeps the scale unchanged and the advantage of the three-dimensional map that allows intuitive perception of the shape of each feature.

The character strings "XX BUILDING" and "2ND ** BUILDING" are displayed in the illustrated example of Fig. 15c. The names of the other features are omitted from the display, in order to avoid the complication of illustration.

Since the display position of the character including the height information is specified according to this embodiment, the character is accordingly displayed not on the ground level of the building but at the higher position of the building as illustrated. Displaying the character at the higher position of each feature in the three-dimensional map prevents the character from being in the blind spot of another feature and ensures natural display that allows easy perception of the correlation of the character to the feature.

In the illustrated example, the height of each building is specified as the height information of the character, so that the character is located on the top of the building. The height information may, however, be set arbitrarily, and the character may be displayed on the side wall of the building.

F. Route Guidance Process

F1. General Processing

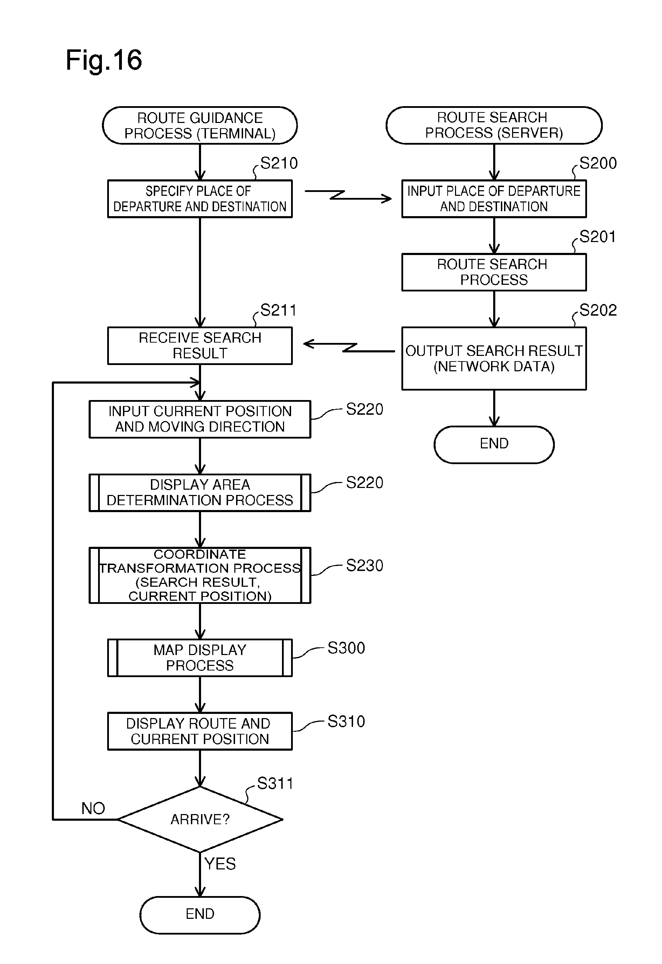

Fig. 16 is a flowchart showing a procedure of route guidance process. The left flow shows the processing flow of the cell phone 300, and the right flow shows the processing flow of the server 200. These processing flows are performed cooperatively by the various function blocks shown in Fig. 3 and, as the hardware element, by the CPUs of the cell phone 300 and the server 200.

The user of the cell phone 300 first specifies the place of departure and the destination in route search (step S210). The place of departure may be the current position obtained by GPS. The destination may be set by any of various methods, such as the name of a feature, the postal address or the coordinate values of latitude and longitude. The cell phone 300 sends the results of specification to the server 200.

The server 200 inputs the specification of the place of departure and the destination (step S200) and performs route search using the network data 213 (Fig. 3) (step S201). The Dijkstra's algorithm may be employed for route search. The server 200 outputs the search result, i.e., the network data of the found route, to the cell phone 300 (step S202).

The cell phone 300 receives the search result (step S211) and performs route guidance by the following procedure.

The cell phone 300 first inputs the user's current position and moving direction (step S220). The current position may be identified by GPS. The moving direction may be determined, based on a positional change from the previous position to the current position.

The cell phone 300 subsequently performs a display area determination process (step S220). This process determines the map display area based on the current position and the moving direction (step S220).

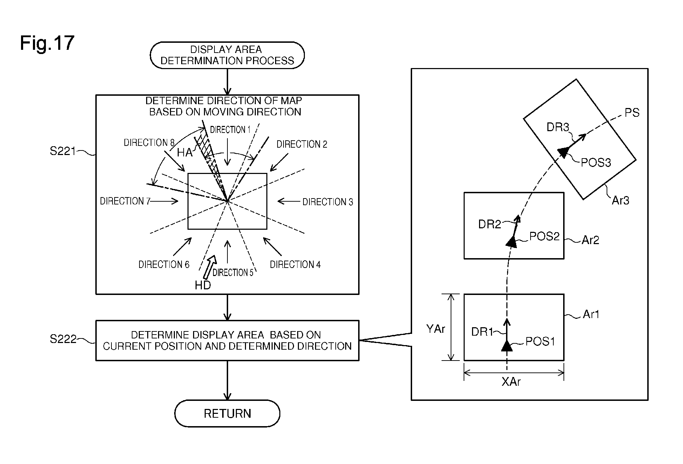

Fig. 17 is a flowchart showing a procedure of display area determination process. The cell phone 300 first determines the direction of the map based on the moving direction (step S221). As described in Fig. 7, feature data are provided with respect to the eight directions according to this embodiment. The direction to be used is accordingly selected among the eight directions, based on the moving direction.

The process of determining the direction of the map is illustrated in the drawing. A rectangle on the center represents an area to be displayed, and the eight directions corresponding to those of Fig. 7 are shown around the rectangle. A 45-degree angle range is allocated to each of the directions as shown by the broken lines. The cell phone 300 selects one angle range including the moving direction among these eight angle ranges. For example, when the user moves in the direction of an arrow HD, the direction 5 is selected.

The angle range may be determined according to the number of directions for which feature data are provided. For example, when feature data are provided for sixteen directions, the angle range is 22.5 degrees. In another example, when feature data are provided for four directions, the angle range is 90 degrees.

As shown in the directions 1 and 8, the angle range allocated to each direction may be greater than 45 degrees and there may be an overlapped area between the directions. The range shown by the dashed-dotted lines is the angle range of greater than 45 degrees. Allocating such wider angle ranges to the directions 1 and 8, there is an overlapped area, such as a hatched area HA, between the directions 1 and 8.

Such setting enables this overlapped area to be used as a hysteresis area in the process of determining the direction. For example, during a change of the moving direction from the direction 8 to the direction 1, the direction 8 is used even when the moving direction enters the overlapped area HA. During a change of the moving direction from the direction 1 to the direction 8, on the contrary, the direction 1 is used even when the moving direction enters the overlapped area HA. Setting the hysteresis advantageously prevents the frequent change of the displayed map when the moving direction frequently changes near the boundary between the direction 1 and the direction 8.

In the illustrated example, the overlapped area HA is set between the direction 1 and the direction 8. A similar overlapped area may be set between other directions. After determining the direction of the displayed map, the cell phone 300 subsequently determines the display area based on the current position and the determined direction (step S222).

The right drawing illustrates an example of determining the display area in the route guidance.

It is assumed that the user moves from a position POS1 to a position POS2 and further to a position POS3 along a route PS shown by the broken line. At the position POS1, the moving direction DR1 is upward in the drawing, i.e., direction 5 (refer to the drawing of step S221). The cell phone 300 accordingly uses the feature data of the direction 5 to set an area of XAr in width and YAr in length as a display area Ar1. The width and the length of the area may be set manually by the user's specification or may be set automatically according to the user's moving speed. The moving speed may be calculated from a time change of the current position.

When the user moves to the position POS2, the moving direction DR2 slightly changes rightward. The moving direction DR2 is, however, still in the angle range of the direction 5. The cell phone 300 accordingly selects the direction 5 at the position POS2 and determines a display area AR2. As a result, during a move from the position POS1 to the position POS2, although the moving direction slightly changes rightward, the map display for guidance shifts in parallel in the direction 5.

When the user further moves to the position POS3, the moving direction DR3 changes more rightward. The moving direction DR3 is then out of the angle range of the direction 5 and enters the angle range of the direction 6. The cell phone 300 accordingly selects the direction 6 at the position POS3 and determines a display area AR3. The map display is then changed from the map in the direction 5 to the map in the direction 6 along the course from the position POS2 to the position POS3.

The description goes back to the route guidance process of Fig. 16.

According to this embodiment, the network data representing the route and the current position are defined by the three-dimensional position coordinates including the height. The roads are generated by parallel projection of 3D data including height information, since the roads reflect undulation, i.e., the change in height of the ground level. Unless the network data is displayed on the map after parallel projection, the route may be displayed out of the roads.

In order to adequately display the route on the roads, the procedure of this embodiment determines the display position by parallel projection of the current position and the network data. This is the coordinate transformation process (step S230). The details of the coordinate transformation will be described later.

On completion of the coordinate transformation, the cell phone 300 performs a map display process according to the determined display area (step S300). The details of this process are similar to the processing flow shown in Fig. 14.

The cell phone 300 subsequently displays the route and the current position (step S310). The route may be shown by a different color or a different line from that of the roads. The direction to move and the corners to turn may be displayed by arrows or another suitable indication.

The cell phone 300 repeats the processing of and after step S220 to continue the route guidance until the user arrives at the destination (step S311).

F2. Coordinate Transformation

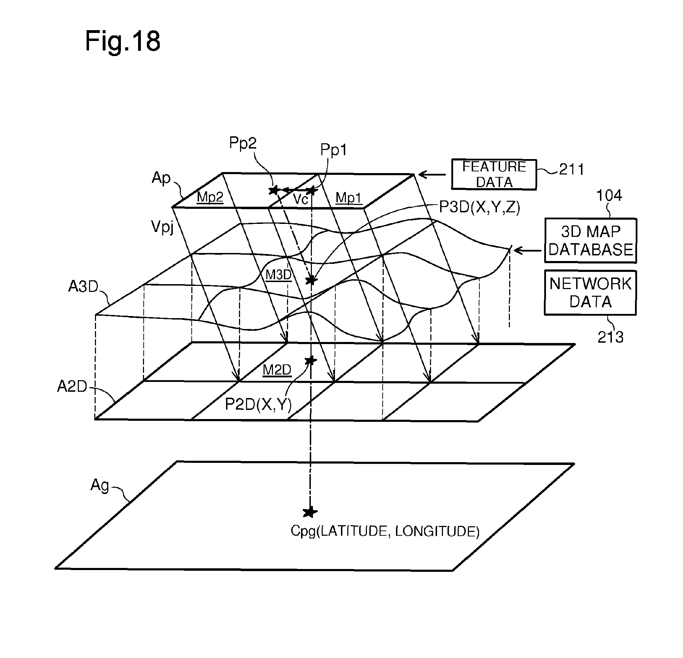

Fig. 18 illustrates the effect of undulation.

A plane A2D represents the ground level in a two-dimensional map, and a plane A3D represents the ground level in a three-dimensional map. The network data 213 and the 3D map database 104 used for generation of feature data are three-dimensional information of the plane A3D as illustrated. An area corresponding to a mesh M2D in the two-dimensional plane A2D corresponds to an undulating mesh M3D.

A plane Ap is a projection drawing by parallel projection. Due to the parallel projection in the direction of an arrow Vpj, an area corresponding to the mesh M2D in the two-dimensional plane A2D is a mesh Mp2 at the obliquely shifted position.

A bottom plane Ag represents a coordinate plane of latitude and longitude obtained by GPS.

According to this embodiment, the current position is given by three-dimensional position coordinates, e.g., a point P3D(X,Y,Z). This coordinate point corresponds to a two-dimensional position Cpg (latitude, longitude) and corresponds to a point P2D(X,Y) in the mesh M2D on the plane A2D where a two-dimensional map is drawn.

Parallel projection projects the point P3D to a point Pp2 in the mesh Mp2 on the plane Ap. On the assumption that two-dimensional elements (X,Y) of the three-dimensional coordinates at the point P3D are coordinate values of parallel projection, the point P3D is projected to a point Pp1 in a mesh Mp1 that is different from the proper mesh Mp2 on the plane Ap. There is accordingly an error Vc from the proper point Pp2.

The procedure of this embodiment performs coordinate transformation corresponding to the shift of the point P3D in the plane Ap by the error Vc, so as to enable adequate parallel projection of the point P3D.

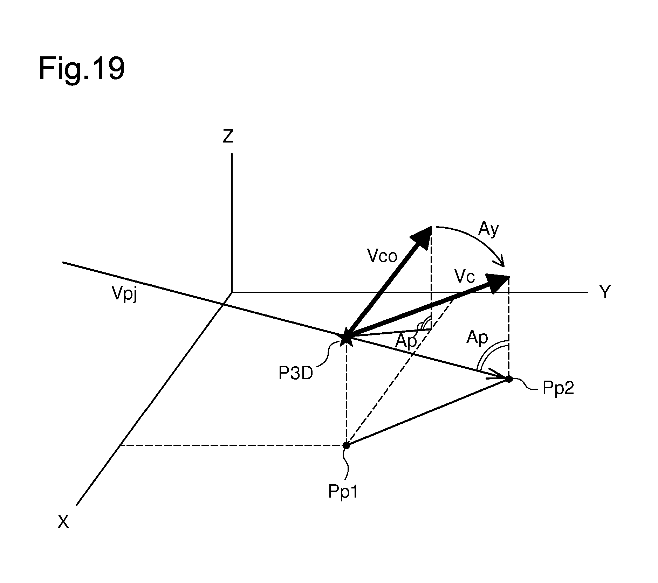

Fig. 19 illustrates a coordinate transformation method by taking into account the undulation. A vector corresponding to the error Vc shown in Fig. 18 is determined and is used as the correction amount in coordinate transformation. From this standpoint, the error Vc is hereinafter called correction vector Vc.

The arrow Vpj represents the direction of parallel projection. The point P3D is to be projected to the point Pp2 by this parallel projection.

The result of projection using only the X and Y coordinates of the point P3D is the point Pp1. The error Vc is accordingly given as a vector from the point Pp1 to the point Pp2, which is equal to the vector Vc.

The correction vector Vc is determinable by an affine transformation matrix as the combination of rotation and parallel translation.

The process first obtains a transformation matrix corresponding to a vector Vc0 for parallel translation in the -X-direction with keeping the height of the point P3D. Since the magnitude of the vector Vc0 is given by the product of the height z of the point P3D and tan(Ap) where Ap represents a projection angle, the vector Vc0(Vc0x,Vc0y, Vc0z) is expressed as:

$$Vc0x = -z \times \tan(Ap);$$

$$Vc0y = 0;$$

and

$$Vc0z = 0.$$

The correction vector Vc is obtained by rotating the vector Vc0 around the z-axis by a projection direction (-Ay). The correction vector Vc(Vcx,Vcy,Vcz) is accordingly expressed as:

$$Vcx = -z \times \tan(Ap) \times \cos(Ay);$$

$$Vcy = z \times \tan(Ap) \times \sin(Ay);$$

and

$$Vcz = 0.$$

Application of this correction vector Vc to the vertically projected point Pp1 of the point P3D determines the point Pp2. The correction vector Vc is substantially equivalent to a two-dimensional vector (Vcx,Vcy) and thereby enables correction in the projection plane of parallel projection.

The correction vector Vc is given on the assumption that the y-axis, the x-axis and the z-axis respectively represent the northerly, the easterly and the height direction and that the projection direction is expressed by the angle in the easterly, the southerly, the westerly, and northerly direction where the northerly direction is set to 0 degree.

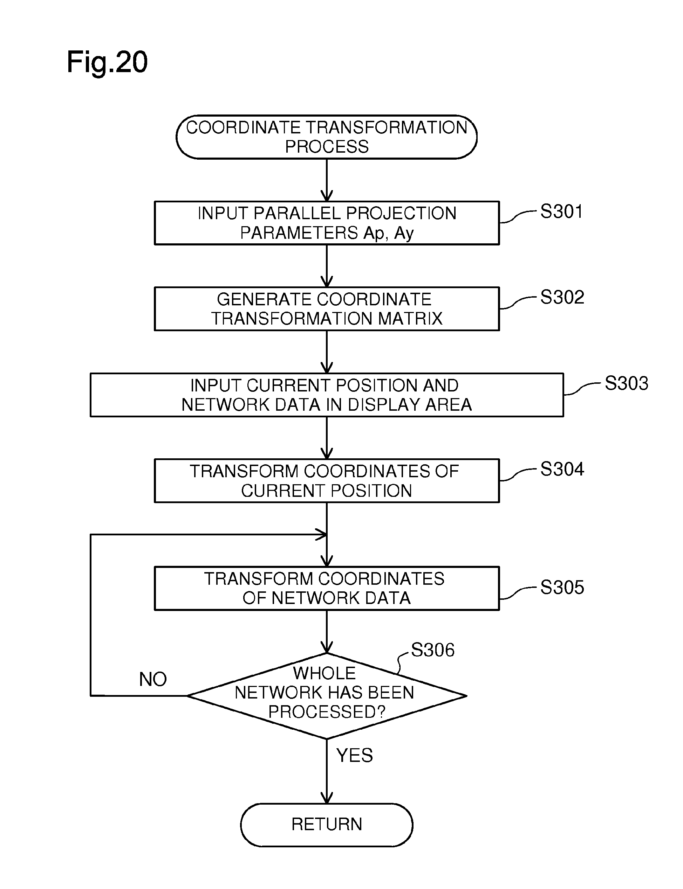

Fig. 20 is a flowchart showing a procedure of coordinate transformation process. This corresponds to the processing of step S230 shown in Fig. 17 and is performed by the map matching transformer 307 of the cell phone 300 (Fig. 3).

On the start of processing flow, the cell phone 300 inputs parallel projection parameters Ap (projection angle) and Ay (projection direction) (step S301). A coordinate transformation matrix is then generated, based on the input parallel projection parameters (step S302). The details of the matrix are described in Fig. 19.

The cell phone 300 subsequently inputs the current position and the network data in the display area (step S303) and performs coordinate transformation of the current position 8step S304). The cell phone 300 also performs coordinate transformation of the network data with respect to the whole network (steps S305 and S306). The coordinate transformation of the network data may be performed prior to the coordinate transformation of the current position or may be performed simultaneously. On completion of the coordinate transformation of the current position and the network data, the cell phone 300 terminates the coordinate transformation process. The map is displayed by using this transformation result (step S310 in Fig. 16).

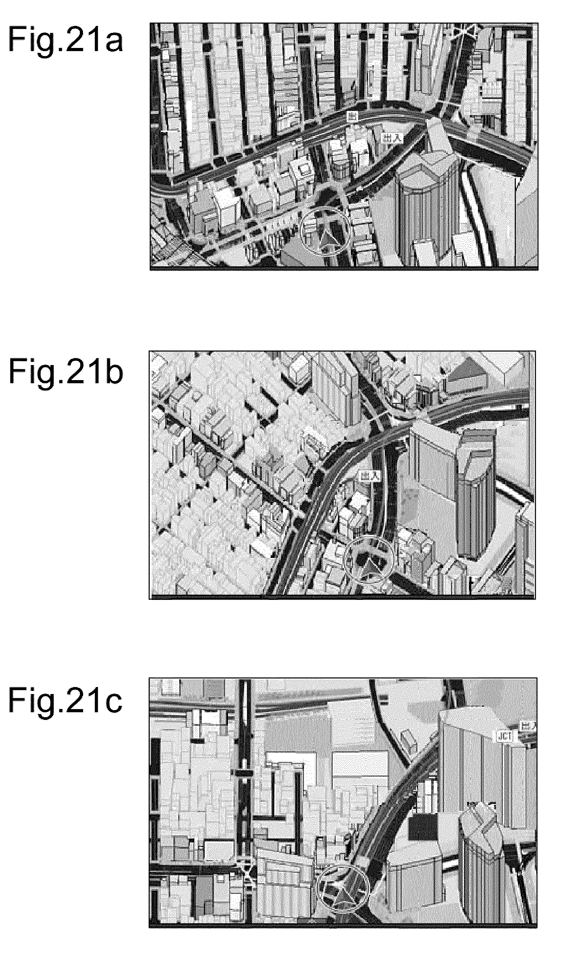

Fig. 21 illustrates an example of route guidance. The display for guidance sequentially changes with movement along the route from Fig. 21a to Fig. 21c.

The current position is shown by a circle on the route in Fig. 21a. Roads and buildings are drawn by using feature data obtained by parallel projection. Since the coordinate transformation has been performed as described above, the route and the current position are both drawn on the adequate roads.

The route displayed in Fig. 21a shows turning right after going straight along the current road.

Fig. 21b shows a display after the right turn. A map is drawn by using feature data in the different projection direction from that of Fig. 21a.

As described in Fig. 17, the map changes according to the moving direction. In this illustrated example, the map is changed from the direction of Fig. 21a to the direction of Fig. 21b when the moving direction changes rightward by a predetermined level during the right turn. Displaying the map by using feature data in the direction corresponding to the moving direction enables the route guidance with avoiding the blind spot by features.

The route displayed in Fig. 21b shows turning right again after going straight along the current road.

Fig. 21c shows a display after the right turn. A map is drawn by using feature data in the further different projection direction from that of Fig. 21b. In this illustrated example, the map is changed from the direction of Fig. 21b to the direction of Fig. 21c when the moving direction changes rightward by a predetermined level during the right turn.

In the illustrated example of Fig. 21, the direction of the map changes during the right turn. Changing the direction of the map is not limited to during the right turn or the left turn. The direction of the map may be changed with a change in moving direction when the user moves along a curved road. The direction of the map may be changed by the user's instruction in the middle of route guidance.

The foregoing describes the embodiment of the invention. The three-dimensional map display system may not have all the functions of the embodiment described above but may implement only part of the functions. The three-dimensional map display system may have additional functions.

The invention is not limited to the above embodiment but various modifications and variations may be made to the embodiment without departing from the scope of the invention. For example, the hardware configuration of the embodiment may be replaced with the software configuration and vice versa.

Industrial Applicability

The invention is applicable to draw a three-dimensional map that expresses features three-dimensionally.

Reference Signs List

| | |
|---|---|
| 100 | Data generation device |
| 101 | Command input |
| 102 | Parallel projector |
| 103 | Parallel projection data |
| 104 | 3D map database |
| 105 | Transmitter/receiver |
| 106 | Behind flag setter |
| 200 | Server |
| 201 | Transmitter/receiver |
| 202 | Database manager |
| 203 | Route searcher |
| 210 | Map database |
| 211 | Feature data |
| 212 | Character data |
| 213 | Network data |
| 300 | Cell phone |
| 300d | Display |
| 300k | Keyboard |
| 301 | Transmitter/receiver |
| 302 | Command input |
| 303 | GPS input |
| 304 | Main controller |
| 305 | Map information storage |
| 306 | Display controller |
| 307 | Map matching transformer |

**Claims**

1. A three-dimensional map drawing system of drawing a three-dimensional map that expresses a feature three-dimensionally, comprising:

   a feature database that stores feature data as two-dimensional drawing data of a feature projected on a plane by parallel projection from an oblique direction inclined by a predetermined projection direction to a vertical direction;
   a drawing range input that inputs specification of a drawing range in which the three-dimensional map is to be drawn; and
   a drawer that reads feature data corresponding to the input specification from the feature database and makes a drawing.

2. The three-dimensional map drawing system according to claim 1, wherein
   the feature data is obtained by parallel projection of a virtual feature that is given by expansion of the feature in a height direction by a factor that is greater than 1.

3. The three-dimensional map drawing system according to either one of claims 1 and 2, wherein
   the feature database stores feature data in a plurality of levels having different scales,
   feature data in each level is generated by parallel projection of an identical projection direction and an identical projection angle, and
   the drawer makes the drawing by using feature data in the level corresponding to the drawing range.

4. The three-dimensional map drawing system according to any one of claims 1 to 3, wherein
   the feature database stores different types of feature data for one identical area with respect to different projection directions,
   the drawing range input further inputs specification of a drawing direction of the three-dimensional map, and
   the drawer makes the drawing by using feature data with respect to a projection direction corresponding to the specified drawing direction.

5. The three-dimensional map drawing system according to claim 4, further comprising:

   a character database that stores character data used to specify a character representing name of the feature, wherein
   the character database is correlated to the different types of feature data with respect to the different projection directions,

the character data has a flag that specifies output or non-output of the character on the three-dimensional map according to the projection direction, and

the drawer outputs the character specified to be output by the flag on the three-dimensional map.

6. The three-dimensional map drawing system according to claim 5, wherein

the character data includes three-dimensional specification of an output position of the character including height information, and

the drawer outputs the character at a position determined by similar parallel projection of the specified output position to parallel projection in generation of the feature data.

7. The three-dimensional map drawing system according to any one of claims 1 to 6, wherein

the feature database stores the feature data in meshes that are predetermined two-dimensional areas, and

each mesh is allowed to store feature data of a feature that is not located in the mesh.

8. The three-dimensional map drawing system according to any one of claims 1 to 7, wherein

data of a road included in the feature data is obtained by parallel projection by taking into account height of each point on the road,

the three-dimensional map drawing system further comprising:

a route guidance information input that inputs at least one of route guidance information to be drawn on the three-dimensional map, i.e., at least one of a route position and a current position as three-dimensionally specified information including height, wherein

the drawer draws a route by similar parallel projection of the specified information to parallel projection in generation of the feature data.

9. A feature data generating method of causing a computer to generate feature data that is used by a three-dimensional map drawing system to draw a three-dimensional map that expresses a feature three-dimensionally,

the three-dimensional map drawing system comprising:

a feature database that stores feature data as two-dimensional drawing data of a feature projected on a plane by parallel projection from an oblique direction inclined by a predetermined projection direction to a vertical direction;

a drawing range input that inputs specification of a drawing range in which the three-dimensional map is to be drawn; and

a drawer that reads feature data corresponding to the input specification from the feature database and makes a drawing,

the feature data generating method comprising the steps of:

causing the computer to input specification of a target area as an object of generating the feature data;

causing the computer to input a three-dimensional model that is located in the target area and an adjacent area in a predetermined range adjoining to the target area, from a three-dimensional map database that stores in advance a three-dimensional model representing a three-dimensional shape of the feature, into a memory;

causing the computer to generate two-dimensional drawing data of the feature projected on the plane by parallel projection from the oblique direction inclined by the predetermined projection direction to the vertical direction, from the three-dimensional model input in the memory and store the generated two-dimensional drawing data in the memory; and

causing the computer to extract data in the specified target area from the two-dimensional drawing data stored in the memory, generate the feature data from the extracted data, and output the generated feature data.

10. A three-dimensional map drawing method of drawing a three-dimensional map that expresses a feature three-dimensionally by a computer including an input that inputs an external instruction, a data accessor that accesses a specified database, and a drawer that outputs an image, the three-dimensional map drawing method comprising the steps of:

causing the input to input specification of a drawing range where the three-dimensional map is to be drawn;

causing the accessor to access a feature database that stores feature data as two-dimensional drawing data of a feature projected on a plane by parallel projection from an oblique direction inclined by a predetermined projection direction to a vertical direction and read feature data corresponding to the specified drawing range; and

causing the drawer to make a drawing, based on the read feature data.

11. A computer program for drawing a three-dimensional map that expresses a feature three-dimensionally by a computer including an input that inputs an external instruction, a data accessor that accesses a specified database, and a drawer that outputs an image, the computer program comprising:

a program code of causing the input to input specification of a drawing range where the three-dimensional map is to be drawn;
a program code of causing the accessor to access a feature database that stores feature data as two-dimensional drawing data of a feature projected on a plane by parallel projection from an oblique direction inclined by a predetermined projection direction to a vertical direction and read feature data corresponding to the specified drawing range; and
a program code of causing the drawer to make a drawing, based on the read feature data.

# Fig.1a

# Fig.1b

# Fig.2a

# Fig.2b

# Fig.3

Fig.4

D1

M1

P1

M2

W

v

u

(u₁,v₁)   (u₂,v₂)

D2

A₁

z

y

x

P3

D3

M3

P2

A₂

Fig.5

Fig.6

EP 2 546 821 A1

# Fig.7

DIRECTION 1
DIRECTION 8
DIRECTION 2
DIRECTION 7
DIRECTION 3
DIRECTION 6
DIRECTION 4
DIRECTION 5
AR

# Fig.8

LV3

LV2

LV1

GL

# Fig.9

Fig.10

# Fig.11

```
┌─────────────────────────────┐
│      FEATURE DATA           │
│   GENERATING PROCESS        │
└─────────────────────────────┘
              │
              ▼
┌─────────────────────────────┐
│  INPUT SPECIFICATION OF     │───── S100
│      OBJECT MESH            │
└─────────────────────────────┘
              │
              ▼
┌─────────────────────────────────────┐
│  INPUT PARALLEL PROJECTION PARAMETERS│───── S101
│(PROJECTION DIRECTION, PROJECTION ANGLE)│
└─────────────────────────────────────┘
              │
              ▼
┌─────────────────────────────────────┐
│  READ 3D MAP DATA WITH RESPECT      │───── S102
│ TO OBJECT MESH AND SPECIFIED RANGE  │
│        AROUND OBJECT MESH           │
└─────────────────────────────────────┘
              │
              ▼
┌─────────────────────────────────────┐
│   PROCESS BY PARALLEL PROJECTION    │───── S103
│ USING PARALLEL PROJECTION PARAMETERS│
└─────────────────────────────────────┘
              │
              ▼
┌─────────────────────────────────────┐
│    CUT OUT AREA CORRESPONDING        │───── S104
│ TO OBJECT MESH FROM POLYGONAL DATA  │
│  GENERATED BY PARALLEL PROJECTION   │
└─────────────────────────────────────┘
              │
              ▼
┌─────────────────────────────┐
│   STORE AS FEATURE DATA      │───── S105
└─────────────────────────────┘
              │
              ▼
┌─────────────────────────────┐
│           END               │
└─────────────────────────────┘
```

Fig.12

FEATURE DATA ⌐211

DIRECTION 1 ▭— BL01

DIRECTION 2 ▭— BL01

DIRECTION 3 ▭— BL01

⋮

DIRECTION 8 ▭—
NAME BL01
POSITION
SHAPE
TYPE
CHARACTER LINK
ATTRIBUTE

LV1
LV2
LV3

CHARACTER DATA ⌐212

NAME BL01
DISPLAY CONTENT XX BUILDING
FONT :
COLOR :
SIZE :
BEHIND FLAG(BF) 1,1,1,1, 0,0,1,1
POSITION
HEIGHT

LV1 :
LV2
LV3

Fig.13

BF=1
DIRECTION 8

BF=1
DIRECTION 1

BF=1
DIRECTION 2

DIRECTION 7
BF=1

BL01
BL04

DIRECTION 3
BF=1

DIRECTION 6  PIC6

DIRECTION 5  PIC5

DIRECTION 4  PIC4

BL01
BL04

BF=0

BL04

BF=0

BL04
BL01

BF=1

Fig.14

```
        ( MAP DISPLAY PROCESS )
                  │
                  ▼
┌─────────────────────────────────┐
│ INPUT SPECIFICATION OF DISPLAY   │──── S300
│ POINT, DIRECTION AND RANGE       │
└─────────────────────────────────┘
                  │
                  ▼
┌─────────────────────────────────┐
│  EXTRACT MAP INFORMATION         │
│  CORRESPONDING TO SPECIFICATION  │──── S301
│                                  │
│                                  │
└─────────────────────────────────┘
                  │
                  ▼
              ╱───────╲          NO
             ╱  ANY    ╲ ──────────────┐
             ╲INSUFFICIENCY?╱          │
              ╲───────╱                │
                  │ YES                │
                  ▼                    │
        ┌──────────────────┐          │
        │     OBTAIN       │── S303    │
        │ MAP INFORMATION  │          │
        └──────────────────┘          │
                  │◄──────────────────┘
                  ▼
        ┌──────────────────┐
        │  DRAW FEATURE    │── S304
        └──────────────────┘
                  │
                  ▼
┌─────────────────────────────────┐
│ DISPLAY CHARACTER                │── S305
│ WITH BEHIND FLAG= 1              │
└─────────────────────────────────┘
                  │
                  ▼
              (  END  )
```

Fig.15a

Fig.15b

Fig.15c

EP 2 546 821 A1

# Fig.16

```
    ROUTE GUIDANCE                          ROUTE SEARCH
   PROCESS (TERMINAL)                      PROCESS (SERVER)
          │                                       │
          │              S210                     │              S200
          ▼                                       ▼
   ┌──────────────────┐                   ┌──────────────────┐
   │  SPECIFY PLACE OF│ ─────────────▶    │ INPUT PLACE OF   │
   │ DEPARTURE AND    │                   │ DEPARTURE AND    │
   │ DESTINATION      │                   │ DESTINATION      │
   └──────────────────┘                   └──────────────────┘
          │                                       │
          │                                       │              S201
          │                                       ▼
          │                               ┌──────────────────┐
          │                               │  ROUTE SEARCH    │
          │                               │  PROCESS         │
          │                               └──────────────────┘
          │              S211                     │              S202
          ▼                                       ▼
   ┌──────────────────┐                   ┌──────────────────┐
   │  RECEIVE SEARCH  │ ◀────────────     │ OUTPUT SEARCH    │
   │  RESULT          │                   │ RESULT           │
   └──────────────────┘                   │ (NETWORK DATA)   │
          │                               └──────────────────┘
          ▼                                       │
   ┌──────────────────┐ S220                      ▼
   │ INPUT CURRENT    │                       ┌───────┐
   │ POSITION AND     │                       │  END  │
   │ MOVING DIRECTION │                       └───────┘
   └──────────────────┘
          │              S220
          ▼
   ┌──────────────────┐
   │ DISPLAY AREA     │
   │ DETERMINATION    │
   │ PROCESS          │
   └──────────────────┘
          │              S230
          ▼
   ┌──────────────────┐
   │  COORDINATE      │
   │ TRANSFORMATION   │
   │ PROCESS          │
   │ (SEARCH RESULT,  │
   │ CURRENT POSITION)│
   └──────────────────┘
          │              S300
          ▼
   ┌──────────────────┐
   │  MAP DISPLAY     │
   │  PROCESS         │
   └──────────────────┘
          │              S310
          ▼
   ┌──────────────────┐
   │ DISPLAY ROUTE AND│
   │ CURRENT POSITION │
   └──────────────────┘
          │              S311
          ▼
   NO    ◇ ARRIVE? ◇
   ◀─────
         │ YES
         ▼
      ┌───────┐
      │  END  │
      └───────┘
```

Fig.17

```
        ┌─────────────────────────┐
        │     DISPLAY AREA         │
        │ DETERMINATION PROCESS    │
        └─────────────────────────┘
                    │
                    ▼
        ┌──────────────────────────────────┐
        │ DETERMINE DIRECTION OF MAP        │
        │ BASED ON MOVING DIRECTION         │
S221    │                                   │
        │                                   │
        └──────────────────────────────────┘
                    │
                    ▼
        ┌──────────────────────────────────┐
S222    │ DETERMINE DISPLAY AREA  BASED ON  │
        │ CURRENT POSITION AND DETERMINED   │
        │ DIRECTION                         │
        └──────────────────────────────────┘
                    │
                    ▼
             ┌─────────────┐
             │   RETURN    │
             └─────────────┘
```

DIRECTION 1
DIRECTION 8
DIRECTION 2
HA
DIRECTION 7
DIRECTION 3
DIRECTION 6
DIRECTION 5
DIRECTION 4
HD

PS
DR3
POS3
Ar3
DR2
POS2
Ar2
YAr
DR1
POS1
Ar1
XAr

36

Fig.18

Fig.19

# Fig.20

```
      ┌─────────────────────────────┐
      │  COORDINATE TRANSFORMATION  │
      │          PROCESS            │
      └─────────────────────────────┘
                    │
                    ▼
      ┌─────────────────────────────┐
      │  INPUT PARALLEL PROJECTION  │── S301
      │     PARAMETERS Ap, Ay       │
      └─────────────────────────────┘
                    │
                    ▼
      ┌─────────────────────────────┐
      │   GENERATE COORDINATE       │── S302
      │   TRANSFORMATION MATRIX     │
      └─────────────────────────────┘
                    │
                    ▼
    ┌───────────────────────────────┐
    │  INPUT CURRENT POSITION AND   │── S303
    │ NETWORK DATA IN DISPLAY AREA  │
    └───────────────────────────────┘
                    │
                    ▼
      ┌─────────────────────────────┐
      │  TRANSFORM COORDINATES OF   │── S304
      │     CURRENT POSITION        │
      └─────────────────────────────┘
                    │
                    ▼
      ┌─────────────────────────────┐
      │   TRANSFORM COORDINATES     │── S305
      │     OF NETWORK DATA         │
      └─────────────────────────────┘
                    │
                    ▼       S306
           ◇─────────────────◇
    NO    ╱      WHOLE        ╲
  ◄──────  NETWORK HAS BEEN
           ╲   PROCESSED?    ╱
            ◇───────────────◇
                    │
                   YES
                    ▼
      ┌─────────────────────────────┐
      │          RETURN             │
      └─────────────────────────────┘
```

Fig.21a

Fig.21b

Fig.21c

## INTERNATIONAL SEARCH REPORT

| | International application No. |
|---|---|
| | PCT/JP2010/058151 |

A. CLASSIFICATION OF SUBJECT MATTER
*G09B29/00*(2006.01)i, *G01C21/00*(2006.01)i, *G06T17/50*(2006.01)i

According to International Patent Classification (IPC) or to both national classification and IPC

B. FIELDS SEARCHED

Minimum documentation searched (classification system followed by classification symbols)
G09B29/00, G09B29/10, G01C21/00-21/24, G01C23/00-25/00, G08G1/00-99/00,
G06T11/00-17/50

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2000-356525 A (Nippon Denki Maikon Technology Kabushiki Kaisha), 26 December 2000 (26.12.2000), entire text; all drawings (Family: none) | 1,9-11<br>2-4,8<br>5-7 |
| Y | JP 3-96985 A (Haruhiko SUZAKI), 22 April 1991 (22.04.1991), entire text; all drawings (Family: none) | 2 |
| Y | JP 9-127862 A (Xanavi Informatics Corp.), 16 May 1997 (16.05.1997), entire text; all drawings (Family: none) | 3-4 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 August, 2010 (04.08.10) | 17 August, 2010 (17.08.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2010/058151 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 10-232605 A  (Matsushita Electric Industrial Co., Ltd.), 02 September 1998 (02.09.1998), entire text; all drawings (Family: none) | 8 |
| A | JP 2000-321975 A  (Denso Corp.), 24 November 2000 (24.11.2000), paragraph [0040]; fig. 5 to 6 & US 6710774 B1          & DE 10023160 A1 | 5-6 |
| A | JP 2001-229402 A  (Mitsubishi Electric Corp.), 24 August 2001 (24.08.2001), paragraphs [0164] to [0166]; fig. 12 to 13 (Family: none) | 7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4070507 B

- JP 3428294 B